# NEUE EUROPÄISCHE PATENTSCHRIFT

(11) **EP 2 945 514 B2**
(45) Veröffentlichungstag und Bekanntmachung des Hinweises auf die Entscheidung über den Einspruch: **25.08.2021**
(45) Hinweis auf die Patenterteilung: 01.08.2018
(21) Anmeldenummer: 14700707.4
(22) Anmeldetag: 16.01.2014
(51) Int. Cl.: A47J 31/00

(54) **VERFAHREN ZUM BETREIBEN EINES GETRÄNKEZUBEREITUNGSAUTOMATEN UND GETRÄNKEZUBEREITUNGSAUTOMAT ZUR DURCHFÜHRUNG EINES SOLCHEN VERFAHRENS**
METHOD FOR OPERATING A BEVERAGE PREPARATION MACHINE, AND BEVERAGE PREPARATION MACHINE FOR CARRYING OUT SUCH A METHOD
PROCÉDÉ POUR FAIRE FONCTIONNER UN PRÉPARATEUR/DISTRIBUTEUR AUTOMATIQUE DE BOISSONS ET PRÉPARATEUR/DISTRIBUTEUR AUTOMATIQUE DE BOISSONS CONÇU POUR METTRE EN OEUVRE UN TEL PROCÉDÉ

(30) Priorität: 17.01.2013 DE 102013200686
(43) Veröffentlichungstag der Anmeldung: 25.11.2015
(73) Patentinhaber: FRANKE Kaffeemaschinen AG, 4663 Aarburg (CH)
(72) Erfinder: ROTH, Sascha, CH-5040 Schöftland (CH); FRANKE, Robin, CH-5600 Lenzburg (CH)
(74) Vertreter: Lemcke, Brommer & Partner Patentanwälte Partnerschaft mbB
(86) Internationale Anmeldenummer: PCT/EP2014/050839
(87) Internationale Veröffentlichungsnummer: WO 2014/111486

(56) Entgegenhaltungen:
- EP-A1- 1 992 263
- WO-A1-2011/046428
- WO-A1-2011/144040
- WO-A1-2011/144049
- WO-A1-2011/147821
- WO-A1-2013/067020
- WO-A2-02/076875
- WO-A2-2009/032874
- DE-T2- 60 023 196
- JP-A- H08 287 325
- JP-A- 2002 288 457
- JP-A- 2005 025 687
- JP-A- 2005 062 947
- JP-A- 2006 252 191
- JP-A- 2008 234 221
- US-A- 5 235 509
- US-A1- 2002 169 675
- US-A1- 2006 188 620
- US-A1- 2008 183 330
- US-A1- 2012 158 173

## Beschreibung

Die Erfindung betrifft ein Verfahren zum Betreiben eines Getränkezubereitungsautomaten sowie solch einen Automaten.

Zur Zubereitung von Kaffeegetränken und Varianten hiervon sind so genannte Kaffeevollautomaten bekannt, weiche vollautomatisch Kaffeegetränke zubereiten und herstellen. Hierbei ist es weiterhin bekannt, dass abhängig von der Wahl eines Benutzers unterschiedliche Getränkevarianten erstellt werden, insbesondere je nach Auswahl Milch in unterschiedlicher Temperatur und Konsistenz (z. B. als Milchschaum) zugegeben wird. Ebenso ist es bekannt, weitere Zusatzstoffe, insbesondere flüssige Geschmackszusatzstoffe, automatisch hinzuzugeben.

Insbesondere bei der professionellen Bewirtung werden von den Kunden zunehmend eine Vielzahl unterschiedlicher Kaffeegetränkevarianten gewünscht, so dass die so genannten Getränkezubereitungsautomaten entsprechend komplex ausgebildet werden, insbesondere eine Mehrzahl von Zusatzgeschmacksstoffen mit entsprechenden Zuführungseinheiten umfassen, so dass abhängig von der Wahl des Benutzers eine Vielzahl von Getränkevarianten automatisch zubereitet und ausgegeben werden kann.

Typischerweise wird solch ein Getränkezubereitungsautomat derart betrieben, dass in einem Auswahlmodus eine Mehrzahl von Getränkevarianten mittels eines Piktogramms grafisch dargestellt ist, beispielsweise Kaffee, Milchkaffee, Espresso und Latte Macchiato und mittels Anwahl dem einer Getränkevariante zugeordneten Piktogramms durch einen Benutzer der Getränkezubereitungsautomat derart gesteuert wird, dass die gewählte Getränkevariante automatisch zubereitet und aus einem Auslass ausgegeben wird. Derartige Kaffeemaschinen mit graphischen Auswahlmöglichkeiten werden in den folgenden Stand der Technik Dokumenten gezeigt: EP 1 992 263, WO 2011 144 049, WO 02 076 875. Der vorliegenden Erfindung liegt die Aufgabe zugrunde, ein Verfahren zum Betreiben eines Getränkeautomaten zur Verfügung zu stellen, welches benutzerfreundlich ist und eine einfache intuitive Bedienung ermöglicht.

Gelöst ist diese Aufgabe durch ein Verfahren zum Betreiben eines Getränkezubereitungsautomaten gemäß Anspruch 1 sowie einen Getränkezubereitungsautomaten gemäß Anspruch 16. Vorzugsweise Ausgestaltungen des erfindungsgemäßen Verfahrens finden sich in den Ansprüchen 2 bis 14. Hiermit wird der Wortlaut sämtlicher Ansprüche explizit per Referenz in die Beschreibung einbezogen. Der erfindungsgemäße Getränkezubereitungsautomat ist zur Durchführung des erfindungsgemäßen Verfahrens ausgebildet, vorzugsweise zur Durchführung einer vorzugsweisen Ausführungsform des erfindungsgemäßen Verfahrens ausgebildet.

Bei dem erfindungsgemäßen Verfahren zum Betreiben eines Getränkezubereitungsautomaten, durch welchen Getränkezubereitungsautomaten zumindest eine Kaffeeeinheit zum Ausgeben von Kaffee und eine Zusatzstoffeinheit zum Ausgeben eines Getränkezusatzstoffes bereitgestellt wird, wird in einem Auswahlmodus mittels einer zumindest teilweisen grafischen Anzeige eine Mehrzahl von Getränkevarianten angezeigt. Mittels Anwahl einer Getränkevariante durch einen Benutzer wird der Getränkezubereitungsautomat derart gesteuert, dass die gewählte Getränkevariante automatisch zubereitet und aus einem Auslass ausgegeben wird.

Wesentlich ist, dass in dem Auswahlmodus zumindest ein Auswahlbereich und ein Vorschaubereich zumindest teilweise grafisch dargestellt werden, wobei in dem Auswahlbereich eine Mehrzahl von auswählbaren Getränkevarianten teilweise grafisch dargestellt wird. In dem Vorschaubereich wird eine von dem Benutzer im Auswahlbereich vorgenommene aktuelle Auswahl zumindest teilweise grafisch dargestellt. Bei Betätigung eines Startelementes durch den Benutzer wird der Getränkezubereitungsautomat derart gesteuert, dass die im Auswahlbereich dargestellte Getränkevariante automatisch zubereitet und aus dem Auslass ausgegeben wird. Auswahlbereich und Vorschaubereich werden hierbei in zumindest einem ersten Betriebsmodus des Getränkezubereitungsautomaten zeitgleich dargestellt, und in einem zweiten Betriebsmodus des Getränkezubereitungsautomaten nach Vornahme einer Auswahl durch den Benutzer der Auswahlbereich ausgeblendet und anschließend der Vorschaubereich dargestellt wird.

Die Erfindung ist in der Kenntnis des Anmelders begründet dass die von den Kunden gewünschte große Anzahl an Getränkevarianten vorbekannten Verfahren zum Betreiben von Getränkezubereitungsautomaten nicht praktikabel darstellbar ist Das erfindungsgemäße Verfahren ermöglicht hingegen eine hohe Flexibilität und intuitive Benutzerführung, da nach Auswahl einer Getränkevariante durch den Benutzer im Auswahlbereich die ausgewählte Getränkevariante in dem Vorschaubereich dargestellt wird. Hierdurch kann insbesondere in dem Vorschaubereich eine größere Darstellung, verglichen mit der Darstellung im Auswahlbereich gewählt werden und der Benutzer erkennt intuitiv die von ihm vorgenommene Auswahl, so dass Fehlbedienungen vermieden werden, insbesondere kann durch die vergrößerte Darstellung mehr Information dem Benutzer übermittelt werden, beispielsweise durch zusätzliche grafische Piktogramme.

Dennoch ist auch das erfindungsgemäße Verfahren intuitiv bedienbar: Aus einer im Auswahlbereich dargestellten Anzahl von Getränkevarianten wählt der Benutzer intuitiv ein Getränk aus und findet dieses in dem Vorauswahlbereich wieder. Hierdurch erfolgt automatisch eine Kontrolle der Benutzer, ob eine korrekte Auswahl erfolgte bzw. ober der Benutzer tatsächlich die zuvor ausgewählte Getränkevariante beziehen will. Erst bei Betätigen des Startelementes wird die automatische Getränkezubereitung und Getränkeausgabe vorgenommen.

Das erfindungsgemäße Verfahren ermöglicht auch insbesondere dadurch eine höhere Flexibilität, dass der Auswahlmodus gemäß an sich bekannter Auswahlmodi ausgestaltet sein kann: Beispielsweise können kachelartig eine Vielzahl von Getränkevarianten grafisch dargestellt sein. Hier weist das erfindungsgemäße Verfahren den Vorteil auf, dass die einzelnen Kacheln klein gewählt werden können, so dass eine größere Anzahl von Getränkevarianten gegen über vorbekannten Verfahren dargestellt werden kann, da nach Auswahl eines Getränks der Benutzer eine eventuelle Fehlauswahl aufgrund der Darstellung im Vorschaubereich erkennt und gegebenenfalls seine Auswahl rückgängig machen kann.

Darüber hinaus können andere Auswahlverfahren verwendet werden, wie beispielsweise Bildschiebeleisten, in welchen der Benutzer mittels Blätterfunktionen zwischen verschiedenen Getränkevarianten oder zwischen verschiedenen Untermengen, beispielsweise mehreren kachelartigen Darstellungen verschiedener Untermengen von Getränkevarianten blättern kann. Solche Blätterfunktionen sind durch die Verbreitung von Tablett-PCs bekannt und der Benutzer wird intuitiv bei Vorsehen entsprechender Piktogramme, beispielsweise ein Pfeil nach rechts am rechten Bildschirmrand und/oder ein Pfeil nach links am linken Bildschirmrand diesen betätigen, um zu weiteren Darstellungen von Untergruppen der auswählbaren Getränkevarianten zu blättern. Auch hier ergibt sich der Vorteil, dass erfahrungsgemäß beim Durchblättern einer solchen Vielzahl von grafischen Darstellungen häufig eine fehlerhafte Auswahl erfolgt, dass versehentlich ein Piktogramm angewählt wird oder aufgrund der begrenzten Fläche der Benutzer des Piktogramms nicht richtig erkennt. Auch hier wird in intuitiver Weise durch die Darstellung der aktuellen Auswahl in dem Auswahlbereich sichergestellt, dass der Benutzer die von ihm getätigte Vorauswahl realisiert und somit überprüft. Erst durch Bestätigung dieser Auswahl mittels Betätigen des Startelementes wird die tatsächliche Getränkezubereitung gestartet.

Wie zuvor ausgeführt, kann bei dem erfindungsgemäßen Verfahren gleichzeitig Auswahlbereich und Vorschaubereich dargestellt werden. Besonders vorteilhaft ist es jedoch, zunächst ausschließlich den Auswahlbereich darzustellen, so dass die gesamte Fläche des Anzeigemediums, typischerweise eines Bildschirms, für den Auswahlbereich verwendet werden kann und somit eine große Anzahl von Getränkevarianten, beispielsweise jeweils ein Kachelpiktogramm dargestellt werden kann. Nach Auswahl einer Getränkevariante aus dem Auswahlbereich wird dieser ausgeblendet und der Vorschaubereich eingeblendet, in welchem nun in stark vergrößerter Darstellung ein detailreiches Piktogramm der getroffenen Auswahl dargestellt wird, an welchem der Benutzer intuitiv und ohne nennenswerte Verzögerung Details seiner Auswahl erkennt und überprüfen kann, um entweder mittels betätigende Startelemente den Zubereitungsvorgang zu starten oder mittels eines vorzugsweise ebenfalls dargestellten Rücksprungelementes, in die jeweils davorliegende Auswahl zurückzukehren, d. h. vorliegend in den Auswahlbereich.

Der erfindungsgemäße Getränkezubereitungsautomat kann im Grundaufbau gemäß vorbekannter Getränkezubereitungsautomaten ausgebildet sein, insbesondere hinsichtlich der Komponenten zur Bereitstellung von Kaffeeprodukten und weiteren Zusatzstoffen, insbesondere Milch, Milchschaum und weiteren Zusatzstoffen, wie beispielsweise Sirup oder anderen Flüssigkeiten. Ebenso ist die Zugabe von Zusatzstoffen in Pulverform automatisiert möglich. Wesentlich ist dass der erfindungsgemäße Getränkezubereitungsautomat zur Durchführung des zuvor beschriebenen erfindungsgemäßen Verfahrens ausgebildet ist. Vorzugsweise ist hierzu ein Bildschirm, insbesondere ein Berührungsbildschirm (Touch Screen) vorgesehen. Insbesondere ein Berührungsbildschirm erlaubt eine äußerst intuitive Bedienung und bietet gleichzeitig eine hohe Variabilität, da die Bedienelemente lediglich grafisch auf dem Bildschirm dargestellt werden und keine festgelegten physikalischen Schalter oder ähnliche Betätigungselemente des Getränkebereitungsautomaten darstellen.

In einer vorzugsweisen Ausführungsform des erfindungsgemäßen Verfahrens beinhaltet der Auswahlmodus einen Themenauswahlmodus, in den ein Themenauswahlbereich dargestellt wird, bevorzugt zumindest teilweise grafisch dargestellt wird. In dem Themenauswahlbereich wird eine Mehrzahl von auswählbaren Getränkethemen vorzugsweise zumindest teilweise grafisch dargestellt. In dieser vorzugsweisen Ausführungsform wird dem Benutzer somit die Auswahl dadurch erleichtert, dass er zunächst eine ihn interessierende Themenkategorie auswählt, ohne dass hierbei bereits die Gesamtanzahl von auswählbaren Getränkevarianten ausgewählt werden muss. Hier bietet sich insbesondere die Möglichkeit einer attraktiven Gestaltung, die den Benutzer inspiriert und anlockt, beispielsweise, indem saisonale Themen je nach Jahreszeit angeboten werden oder je nach aktueller Geschmacksentwicklung und Modeerscheinung entsprechende Geschmacksstoffe oder übergeordnete Themen angezeigt werden. Beispielsweise kann ein Themenauswahlmodus das Thema "Originale" beinhalten, welches die klassischen Kaffeegetränke wie vorzugsweise Kaffee, Espresso, Milchkaffee und Cappuccino umfasst. Ein weiteres Thema kann beispielsweise "Sommerkreationen" beinhalten, welches kalte Kaffeegetränke und/oder Kaffeegetränke mit Früchte-Geschmackszusätzen umfasst. Ein weiteres Thema können beispielsweise Katfeegetränke mit alkoholischen Zusätzen sein.

Vorzugsweise ist das Verfahren derart ausgebildet, dass nach Auswahl eines Getränkethemas durch den Benutzer eine diesem ausgewählten Getränkethema zugeordnete Untermenge von Getränkevarianten in dem Auswahlbereich dargestellt wird. Insbesondere ist es vorteilhaft, dass zunächst ausschließlich der Themenauswahlbereich dargestellt wird und nach erfolgter Auswahl eines Themas der Themenauswahlbereich ausgeblendet wird und der Auswahlbereich in einer der zuvor beschriebenen Varianten dargestellt wird. Hierdurch kann einerseits die gegebene Bildschirmfläche optimal ausgenutzt werden und andererseits wird eine Verwirrung seitens des Benutzers vermieden, da stets nur die Komponenten, die für die aktuelle Auswahl notwendig sind, sichtbar sind.

In einer weiteren vorzugsweisen Ausführungsform des erfindungsgemäßen Verfahrens beinhaltet der Auswahlmodus einen Schnellauswahlmodus, in dem in dem Auswahlbereich gleichzeitig eine Mehrzahl wahlweise auswählbarer unterschiedlicher Getränkevarianten zumindest teilweise grafisch dargestellt ist. Bei dieser Variante kann zwar, verglichen mit dem Themenauswahlmodus, nur eine geringere Anzahl von Getränkevarianten intuitiv für den Benutzer erfassbar dargestellt werden. Vorteilhaft ist jedoch, dass weniger Auswahlvorgänge notwendig sind, so dass der Benutzer nach Auswahl einer Getränkevariante diese unmittelbar im Vorschaubereich sieht und durch Anwahl des Startelementes die Getränkeauswahl starten kann, so dass lediglich zwei Bedienungsvorgänge notwendig sind. Dies ist beispielsweise bei Selbstbedienungstheken sinnvoll, bei denen ein schneller Durchsatz erwünscht ist.

In einer vorzugsweisen Ausführungsform des vorgenannten Schnellauswahlmodus wird dieser dahingehend erweitert, dass eine Blätterfunktion wie zuvor beschrieben vorgesehen ist, so dass die zur Auswahl stehenden Getränkevarianten in mehrere Untergruppen aufgeteilt sind, wobei jeweils nur die Getränkevarianten einer Untergruppe dargestellt werden und mittels Betätigen der Blätterfunktion durch den Benutzer zwischen der Darstellung einer Untergruppe und der Darstellung einer oder mehrerer Untergruppen gewechselt wird. Eine solche Blätterfunktionen kann bevorzugt durch einen Pfeil nach rechts am rechten Bildschirmrand und/oder ein Pfeil nach links am linken Bildschirmrand realisiert sein, um durch Betätigen des entsprechenden Pfeils zu weiteren Darstellungen von Untergruppen der auswählbaren Getränkevarianten zu blättern. Anschließend erfolgt, wie zuvor beschrieben, die Auswahl einer Getränkevariante durch den Benutzer, welche Auswahl im Vorschaubereich dargestellt wird und im Betätigen des Startelementes wird die Getränkeausgabe in Gang gesetzt.

In einer weiteren vorzugsweisen Ausführungsform des erfindungsgemäßen Verfahrens beinhaltet der Auswahlmodus einen Komponentenauswahlmodus, indem in dem Auswahlbereich eine Mehrzahl von durch den Benutzer auswählbaren Getränkegrundvarianten dargestellt wird. Bei Auswahl einer Getränkegrundvariante wird in einem Unterauswahlbereich eine Mehrzahl von durch den Benutzer auswählbaren Getränkemodifikationen zu dieser ausgewählten Getränkegrundvariante angezeigt.

Bel dieser vorzugsweisen Ausführungsform wird somit nach Art eines Baukastensystems das gewünschte Getränk zusammengestellt. Wesentlich hierbei ist, dass zunächst dem Benutzer lediglich die Getränkegrundvarianten bereitgestellt werden, so dass keine Verwirrung durch Darstellung aller möglichen Getränkemodifikationen entsteht. Erst nach Auswahl einer Getränkegrundvariante werden die für diese Getränkegrundvariante angebotenen Modifikationen, welche typischerweise eine Untergruppe der insgesamt möglichen Modifikationen darstellen, angezeigt, so dass der Benutzer bei dieser Auswahlstufe somit intuitiv lediglich die Modifikation anwählt. Vorzugsweise können für alle oder manche Modifikationen weitere Untermodifikationen vorgesehen sein, die entsprechend erst bei Anwahl der zugehörigen Modifikation für den Benutzer auswählbar angezeigt werden.

Bei dieser vorzugsweisen Ausführungsform ist es insbesondere vorteilhaft, wenn gleichzeitig zu dem Auswahlbereich der Vorschaubereich dargestellt wird, so dass die Darstellung in dem Vorschaubereich stets abhängig von der jeweils vorgenommenen Auswahl des Benutzers aktualisiert wird, d. h. bei Auswahl der Getränkegrundvariante wird lediglich diese Grundvariante im Vorschaubereich dargestellt, bei Auswahl einer weiteren Modifikation wird zusätzlich diese Modifikation dargestellt, so dass der Benutzer intuitiv die momentane Zusammenstellung erfasst.

Vorzugsweise umfassen die Getränkegrundvarianten eines oder mehrere Elemente, bevorzugt alle Elemente der Gruppe Kaffee schwarz, Espresso, Milchkaffee, Cappuccino, Latte Macchiato. Die Getränkemodifikationen können Geschmackszusatzstoffe, wie beispielsweise Vanille, Erdbeere oder weitere Geschmacksstoffe sowie Kombinationen mehrerer Geschmacksstoffe umfassen. Ebenso oder zusätzlich können die Getränkemodifikationen Modifikationen hinsichtlich der Temperatur umfassen, beispielsweise eine Modifikation derart, dass ein gekühltes Kaffeegetränk bzw. Kaffeemischgetränk ausgegeben wird. Vorteilhafterweise werden die Getränkegrundvarianten in intuitiv erfassbaren Piktogrammen dargestellt, beispielsweise Kaffee schwarz in einer einfachen Kaffeetasse, Latte Macchiato in einem Glas mit einer entsprechenden Beschichtung. Espresso als Espressotasse. Die Modifikationen können vorteilhafterweise durch Piktogramme der jeweiligen Geschmacksstoffe, beispielsweise Vanilleblüte für Vanille und des jeweiligen Obstes, beispielsweise einer Erdbeere für den jeweiligen Geschmackszusatz bzw. einer Schneeflocke oder eines Eiswürfels für die Ausgabe eines gekühlten Getränkes dargestellt werden.

Vorzugsweise werden die Piktogramme, welche zur Darstellung der Getränkemodifikationen verwendet werden, bei Auswahl solch einer Getränkemodifikation im Vorschaubereich hinzugefügt.

Wählt der Benutzer somit beispielsweise als Getränkemodifikation die Vanilleblüte an, so wird im Vorschaubereich dem dargestellten Getränk, beispielsweise einem in einem Glas dargestellten Latte Macchiato, eine Vanilleblüte hinzugefügt, so dass der Benutzer in einfacher Weise intuitiv die momentane Getränkezusammenstellung erfasst.

Auch bei dieser Variante wird durch Betätigen eines Startelementes der Zubereitungsvorgang gestartet.

Vorzugsweise sind auch hier Rücksprungelemente vorgesehen, um eine Auswahl, insbesondere die Auswahl einer Getränkemodifikation, rückgängig zu machen, so dass insbesondere auch in den Vorschaubereich das Piktogramm der zugehörigen Getränkemodifikation bei Betätigen des Rücksprungelementes nicht mehr angezeigt wird.

Eine besonders einfache intuitiv erfassbare Ausgestaltung ergibt sich, in dem die Getränkemodifikationen grafisch der Getränkehauptvariante nach Art eines Drop-down-Menus zugeordnet werden. Nach Auswahl einer Getränkegrundvariante öffnet sich somit eine vorzugsweise in einer Reihe angeordnete Liste von dieser Getränkevariante zugeordneten Getränkemodifikationen, so dass der Benutzer in einfacher Weise intuitiv erkennt, dass die dargestellten Getränkemodifikationen speziell dieser zuvor ausgewählten Getränkegrundvariante zugeordnet sind. In einer weiteren vorzugsweisen Ausführungsform des erfindungsgemäßen Verfahrens werden in dem Vorschaubereich zusätzlich durch den Benutzer auswählbare Bedienelemente zum Ändern der Getränkeeigenschaft dargestellt. Hierdurch kann der Benutzer nach bereits getätigter Auswahl des gewünschten Getränkes, welches in dem Vorschaubereich dargestellt wird, noch Änderungen an der Getränkeeigenschaft durch Betätigen der zuvor genannten Bedienelemente vornehmen. Insbesondere ist es vorteilhaft, Bedienelemente zum Ändern der Ausgabemenge und/oder der verwendeten Kaffeeart und/oder der Zubereitungstemperatur eines oder mehrere Elemente des Getränks und/oder zum Hinzufügen eines weiteren Geschmacksstoffes darzustellen. Beispielsweise können bevorzugt eines oder mehrere Elemente aus der Gruppe entkoffeiniert, klein, groß, zweifach (doppelte Menge), fettarme Milch dargestellt werden.

Auch hier werden vorteilhafterweise die Bedienelemente abhängig von der vorgenommenen und in dem Vorschaubereich dargestellten Auswahl dargestellt D. h., dass beispielsweise bei Auswahl eines Kaffeegetränks, welches keine Milch umfasst, entsprechend im Vorschaubereich ein Bedienelement "fettarme Milch" nicht oder als nicht auswählbar (z.B. dunkler oder grau) dargestellt wird. Auch hier ist es somit vorteilhaft, den Getränkevarianten aus der Gesamtanzahl von möglichen Modifikationen jeweils Untergruppen zuzuordnen, die bei Auswahl der jeweiligen Getränkevariante in dem Vorschaubereich dargestellt werden.

In einer weiteren vorzugsweisen Ausführungsform des erfindungsgemäßen Verfahrens ist mittels des Auswahlmodus eine Mehrzahl von Getränkevarianten durch den Benutzer auswählbar und die ausgewählten Getränkevarianten werden als eine Jobliste in einem Joblistebereich dargestellt.

Bei dieser vorzugsweisen Ausführungsform ist es somit nicht notwendig, dass der Benutzer nach Auswahl einer gewünschten Getränkevariante diese zunächst tatsächlich durch Betätigen des Startelementes durch die Getränkezubereitungsmaschine zubereiten lässt. Bei dieser vorzugsweisen Ausführungsform kann der Benutzer nacheinander mehrere gleiche oder unterschiedliche Getränkevarianten auswählen, die in der Jobliste gespeichert werden und auch im Joblistenbereich dargestellt werden, so dass der Benutzer die gewählten Getränkevarianten stets im Blick hat. Insbesondere ist es vortellhaft, im Joblistenbereich die gewählten Getränkevarianten in der Reihenfolge der Auswahl darzustellen, so dass der Benutzer intuitiv seine Auswahl in einfacher Weise überprüfen kann.

Vorzugsweise wird hierbei nach Auswahl des Startelementes der Getränkezubereitungsautomat derart gesteuert, dass die zuerst dargestellte Getränkevariante, welche vorzugsweise auch die zuerst ausgewählte Getränkevariante ist, zubereitet wird.

Insbesondere ist es vorteilhaft, dass nach Abschluss der Zubereitung dieser Getränkevariante die zugehörige Darstellung ausgeblendet wird und die nachfolgend ausgewählten Getränkevarianten der Jobliste jeweils einen Platz nach vorne rückend dargestellt werden. Auf diese Weise kann der Benutzer in einfacher und intuitiver Weise das Abarbeiten der Jobliste erfassen.

Vorzugsweise ist das Verfahren derart ausgebildet, dass jede Getränkevariante der Jobliste separat durch Betätigen des Startelementes für die Zubereitung gestartet werden muss. Auf diese Weise kann der Benutzer beispielsweise eine Bestellung zunächst derart abarbeiten, dass die gewünschten Getränkevarianten ausgewählt werden und somit in der Jobliste gespeichert und auch im Joblistenbereich dargestellt werden. Anschließend kann der Benutzer durch Betrachten des Joblistenbereiches in einfacher Welse das als nächstes zuzubereitende Getränk erfassen, ein entsprechendes Behältnis (z.B. ein kleine Tasse für Espresso, ein Glas für Latte Macchiato) unter den Auslass stellen und durch Betätigen des Startelementes die Zubereitung starten. Nach erfolgter Zubereitung stoppt der Getränkezubereitungsautomat und der Benutzer kann in einfacher Weise die nun an die erste Stelle im Joblistenbereich gerückte ursprünglich als zweite ausgewählte Getränkevariante visuell erfassen, ein entsprechendes Behältnis unter den Auslass stellen und durch Betätigen des Startelementes die zweite Zubereitung starten und diesen Vorgang bis zum Abarbeiten der gesamten Jobliste wiederholen, so dass sämtliche Getränkevarianten für diese Bestellung unmittelbar nacheinander hergestellt werden und in dem gewünschten heißen oder kalten Zustand schnellstmöglich den Kunden serviert werden können.

Vorzugsweise weist mindestens ein Element im Joblistenbereich, bevorzugt alle Elemente, ein Löschelement auf und bei Betätigen eines Löschelementes durch den Benutzer wird das zugeordnete Element der Jobliste aus der Jobliste gelöscht. Hierdurch kann der Benutzer in einfacher Weise einzelne Elemente aus der Jobliste löschen, ohne dass der gesamte Vorgang abgebrochen werden müsste. Dies ist insbesondere vorteilhaft, falls beispielsweise während der Abarbeitung einer Bestellung sich herausstellt, dass eine fehlerhafte Wahl vorliegt oder sich der Kundenwunsch änderte.

In einer weiteren vorzugsweisen Ausführungsform ist die Reihenfolge der Getränkevarianten der Jobliste durch den Benutzer änderbar, insbesondere mittels grafischen Verschlebens zugeordneter Piktogramme in dem Joblistenbereich. Bei dieser vorzugsweisen Ausführungsform kann der Benutzer somit durch einfaches "Verschieben" der grafischen Symbole der jeweiligen Getränkevarianten im Joblistenbereich die Reihenfolge der Zubereitung ändern.

Aufgrund der grafisch unterstützten Benutzerführung wird der Benutzer bei dem erfindungsgemäßen Verfahren somit in intuitiv erfassbarer und unterhaltsamer Weise zur Auswahl einer gewünschten Getränkevariante geleitet, wobei das Risiko der fehlerhaften Auswahl einer nicht gewünschten Getränkevariante erheblich reduziert ist, insbesondere durch die grafische Darstellung in dem Vorschaubereich sowie durch die Möglichkeit, durch Betätigen der entsprechenden Rücksprungelemente eine gegebenenfalls fehlerhafte Auswahl zu korrigieren. Dies wirkt sich besonders vorteilhaft im ersten Betriebsmodus bei Anwendungen durch einen professionellen Benutzer aus, beispielsweise einen Kellner oder Barista, der in kurzer Zeit eine Vielzahl von Bestellungen fehlerfrei in die zuvor beschriebene Jobliste eingeben muss.

In einer weiteren vorzugsweisen Ausführungsform des erfindungsgemäßen Verfahrens ist der Auswahlmodus als Guthabenmodus ausgebildet, in dem ein Guthaben des Benutzers angezeigt wird und jeder Getränkevariante ein Preis zugeordnet ist und nur solche Getränkevarianten auswählbar sind, deren Preis kleiner oder gleich dem Guthaben ist. Insbesondere ist es vorteilhaft, solche Getränkevarianten, deren Preis kleiner oder gleich des Guthabens ist, grafisch hervorgehoben darzustellen, beispielsweise heller oder farbig umrandet, so dass der Benutzer einfach und intuitiv die momentan für sein Guthaben auswählbaren Getränkevarianten erkennt. Insbesondere ist es vorteilhaft, dass bei versuchter Auswahl einer Getränkevariante mit einem Preis größer des Guthabens eine Fehlermeldung und/oder der Fehlbetrag zur Auswahl angezeigt werden.

Die vorangegangene Beschreibung des erfindungsgemäßen Verfahrens und der vorzugsweisen Ausführungsform zeigt die hohe Flexibilität und Variabilität der Erfindung. So ist ist zweite Betriebsmodus, insbesondere der vorbeschriebene Themenauswahlmodus, für Endkunden geeignet, beispielsweise Endkunden, die in einem Selbstbedienungsbereich den Getränkezubereitungsautomaten bedienen, bevorzugt in Kombination mit dem Guthabenmodus. Für einen professionellen Benutzer, beispielsweise einen Kellner oder Barista ist der erste Betriebsmodus, insbesondere der Komponentenauswahlmodus besonders geeignet. Der Schnellauswahlmodus kann sowohl für die Endkunden, als auch für den professionellen Benutzer besonders geeignet sein.

Das erfindungsgemäße Verfahren ist daher vorzugsweise derart ausgebildet, dass wahlweise durch einen Betreiber ein Modus aus der Gruppe Themenauswahlmodus, Schnellauswahlmodus, bevorzugt aus der Gruppe Auswahlmodus, Schnellauswahlmodus, Komponentenauswahlmodus vorgebbar ist, insbesondere bevorzugt mittels einer passwortgeschützten Vorgabe.

Auf diese Weise ist ein äußerst flexibles Verfahren gegeben, das individuell an die jeweilige Benutzungssituation angepasst werden kann. Die passwortgeschützte Vorgabe verhindert dabei ein unbeabsichtigtes Ändern des gewünschten Auswahimodus.

Weiterhin zeichnet sich das erfindungsgemäße Verfahren dadurch aus, dass mit hoher Flexibilität eine beliebige Anzahl von Getränkevarianten zur Auswahl vorgegeben werden kann. Vorzugsweise ist daher eine Gesamtmenge von Getränkevarianten vorgegeben und aus dieser gesamten Menge ist eine Untermenge für den Betrieb des Getränkezubereitungsautomaten auswählbar, so dass dem jeweiligen Benutzer lediglich diese Untermenge an Getränkevarianten zur Auswahl gestellt wird. Hierdurch kann vorteilhafterweise beispielsweise werkseitig eine große Anzahl von Getränkevarianten vorgesehen werden, wohingegen der Benutzer oder ein Kundenbetreuer aus der großen Anzahl eine Untermenge an gewünschten oder für die jeweilige Konfiguration des Getränkezubereitungsautomaten möglichen Getränkevarianten auswählt. Auch hier verhindert eine passwortgeschützte Auswahl, dass ein unbeabsichtigtes Ändern der Untermenge der Getränkevarianten erfolgt.

Die vorangehend beschriebenen Darstellungen in den unterschiedlichen Bereichen, insbesondere Auswahlbereich und Vorschaubereich erfolgen vorzugsweise zumindest teilweise grafisch. Es liegt im Rahmen der Erfindung, vollständig textbasierte Darstellung zu wählen. Besonders vorteilhaft, da intuitiv durch einen Benutzer und unabhängig von dessen Sprachkenntnissen erfassbar, ist jedoch die zumindest teilweise grafische Darstellung, insbesondere piktogrammartige Darstellung. Besonders vorteilhaft ist die ausschließlich grafische Darstellung, da hier eine höhere Informationsdichte und visuell einfach erfassbare Darstellung möglich ist.

Weitere vorzugsweise Merkmale und Ausführungsformen der Erfindung werden nachfolgend anhand der Figuren und Ausführungsbeispielen beschrieben. Dabei zeigt:
- Figur 1: ein Ausführungsbeispiel des erfindungsgemäßen Verfahrens, bei welchem zwischen einem Themenauswahlmodus und einem Schnellauswahlmodus ausgewählt werden kann;
- Figur 2: eine Detailansicht des Themenauswahlmodus;
- Figur 3: eine Teilansicht eines Ausführungsbeispiels eines Getränkevarianteauswahlbereichs;
- Figur 4: eine Teilansicht eines Ausführungsbeispiels eines Vorschaubereichs eines Themenauswahlmodus;
- Figur 5: eine weitere Teilansicht eines Ausführungsbeispiels eines Vorschaubereichs;
- Figur 6: eine Teilansicht eines weiteren Ausführungsbeispiels eines Auswahlbereichs eines Schnellauswahlmodus;
- Figur 7: ein weiteres Ausführungsbeispiel eines Vorschaubereichs eines Schnellauswahlmodus;
- Figur 8: der in Figur 4 dargestellte Vorschaubereich, bei welchem zusätzlich ein Geschmacksstoff gewählt wurde;
- Figur 9: ein schematisches Flussdiagramm eines Ausführungsbeispiels eines Guthabenmodus mit Schnellauswahlmodus;
- Figur 10: ein Ausführungsbeispiel eines Auswahlbereichs des in Figur 9 dargestellten Guthabenmodus mit Schnellauswahlmodus;
- Figur 11: ein schematisches Ablaufdiagramm eines Ausführungsbeispiels eines Komponentenauswahlmodus;
- Figur 12: ein Ausführungsbeispiel eines Auswahlbereichs und Vorschaubereichs des in Figur 11 dargestellten Komponentenauswahlmodus;
- Figuren 13 bis 15: verschiedene Bearbeitungszustände bei Bedienen des in Figur 12 dargestellten Komponentenauswahlmodus;
- Figur16: ein weiteres Ausführungsbeispiel des in Figur 12 dargestellten Komponentenauswahlmodus mit in einem Joblistenbereich dargestellter Jobliste;
- Figur 17: eine isometrische Ansicht eines erfindungsgemäßen Getränkezubereitungsautomaten und
- Figur 18: ein Blockdiagramm des Getränkezubereitungsautomaten aus Figur 17.

Die in den Figuren dargestellten Anordnungen und grafischen Ausgestaltungen sind beispielhaft. Es liegt im Rahmen der Erfindung, das erfindungsgemäße Verfahren mit anderen Anordnungen oder grafischen Ausgestaltungen auszubilden.

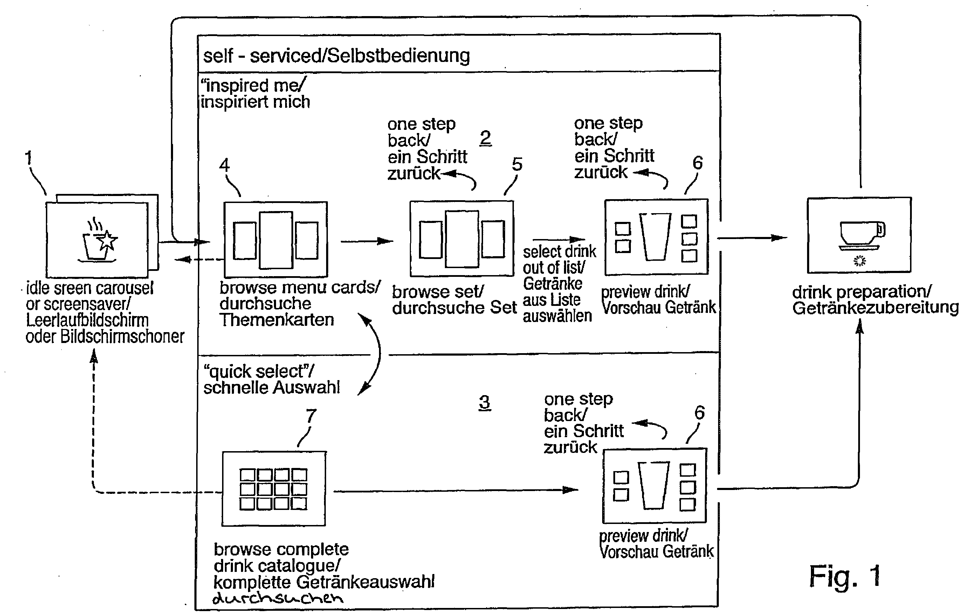

In Figur 1 ist schematisch ein Flussdiagramm eines Ausführungsbeispiels des erfindungsgemäßen Verfahrens dargestellt.

Wird der Getränkezubereitungsautomat eine vorgegeben Zeit nicht benutzt, so wird ein Leerlaufmodus (1) eingestellt, bei welchem eine grafische Anzeige nach Art eines Bildschirmschoners oder mehrerer in zeitlicher Abfolge mit einer vorangestellten Anzeigezeit hintereinander folgenden Bildern dargestellt wird.

Diese dargestellten Bilder im Leerlaufmodus können Werbebilder sein, mit denen der Kunde auf weitere Produkte, insbesondere Produkte anderer Hersteller aufmerksam gemacht wird. Ebenso kann in einem besonders bevorzugten Ausführungsbeispiel der Leerlaufmodus darin bestehen, dass verschiedene Getränkevarianten oder Kombinationen mehrerer Getränkevarianten auf dem Bildschirm dargestellt werden und der Kunde somit durch die dargestellten Getränke inspiriert und angelockt werden kann.

In den Figuren 1 bis 16 dargestellten Ausführungsbeispiel wird das Verfahren auf einem Getränkezubereitungsautomat ausgeführt, welcher einen berührungsempfindlichen Bildschirm umfasst. Sämtliche Bildschirmdarstellungen sind auf diesem berührungsempfindlichen Bildschirm dargestellt und eine Auswahl kann durch den Benutzer durch Berühren der entsprechenden Bereiche in an sich bekannter Weise erfolgen.

In dem in Figur 1 dargestellten schematischen Flussschema ist links der Leerlaufmodus 1 ("idle sreen carousel or screensaver"/Leerlaufbildschirm oder Bildschirmschoner) dargestellt, in welchem, wie zuvor erwähnt, ein Bildschirmschoner oder eins oder mehrere nachfolgend dargestellte Leerlaufmodusbilder angezeigt werden. Durch Berühren des Bildschirms gelangt der Benutzer je nach Vorgabe durch den Betreiber entweder in den oben dargestellten Themenauswahlmodus 2 ("inspired me"/inspiriert mich) oder in den unten dargestellten Schnellauswahlmodus 3 ("quick select"/schnelle Auswahl).

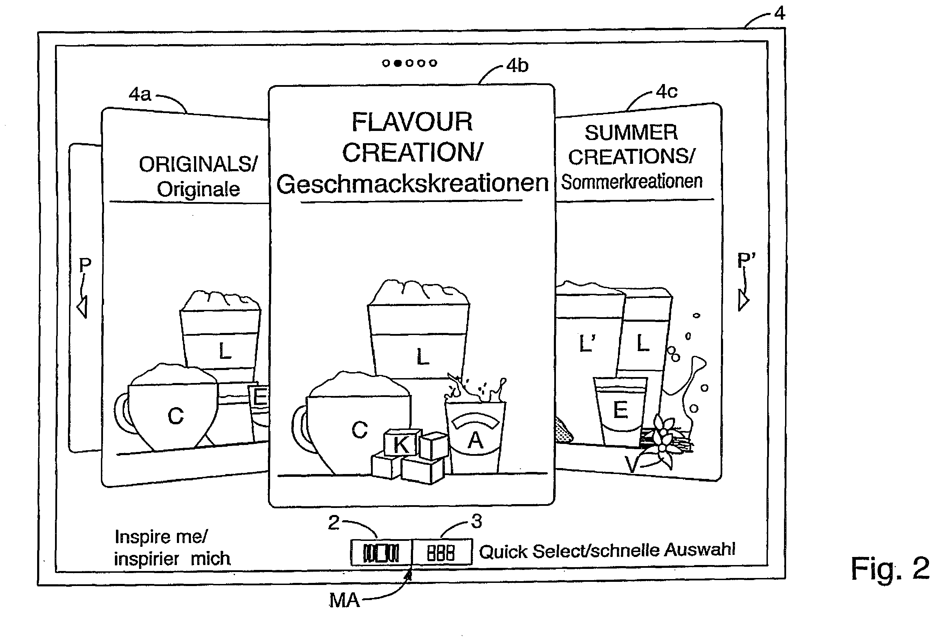

Ist durch den Betreiber beispielsweise der Themenauswahlmodus 2 vorgegeben, so erscheint nach Berühren des Bildschirms durch den Benutzer ein Themenauswahlbereich 4 ("browse menu cards"/durchsuche Themenkarten) eines Auswahlmodus. Der Themenauswahlbereich 4 beinhaltet mehrere Themenkarten, die nachfolgend anhand von Figur 2 erläutert werden.

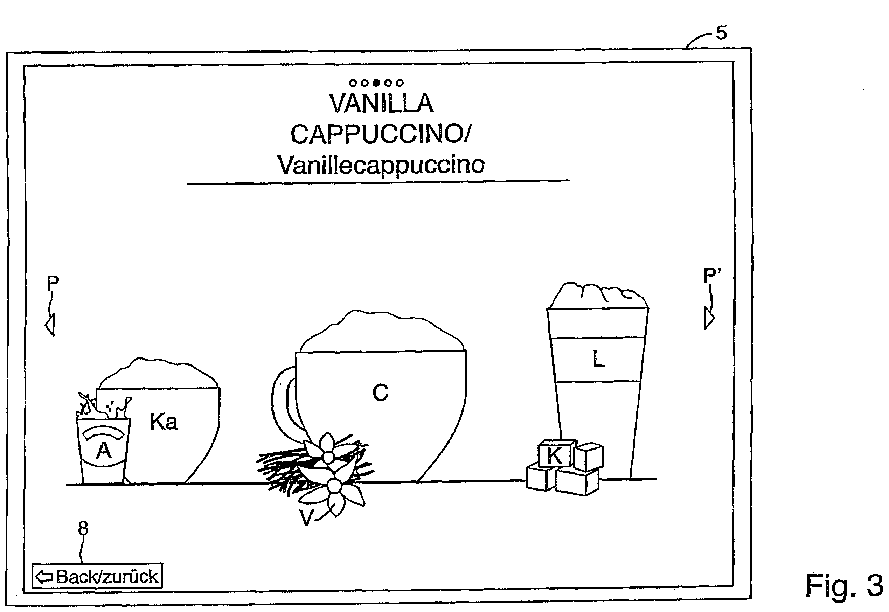

Nach Auswahl einer Themenkarte durch den Benutzer erscheint ein als Getränkevariante-Auswahlbereich 5 ("browse set"/durchsuche Set) ausgebildeter Auswahlbereich des Auswahlmodus, in welchem die dem ausgewählten Thema zugeordnete Untermenge von Getränkevarianten dargestellt wird. Dieser Getränkevariante-Auswahlbereich 5 wird nachfolgend anhand Figur 3 näher erläutert.

Der Benutzer kann nun über eine Rücksprung-Option "one step back"/ein Schritt zurück wieder zu dem Themenauswahlbereich 4 zurückspringen, beispielsweise, sofern er im Getränkevariante-Auswahlbereich 5 keine passende Getränkevariante gefunden hat.

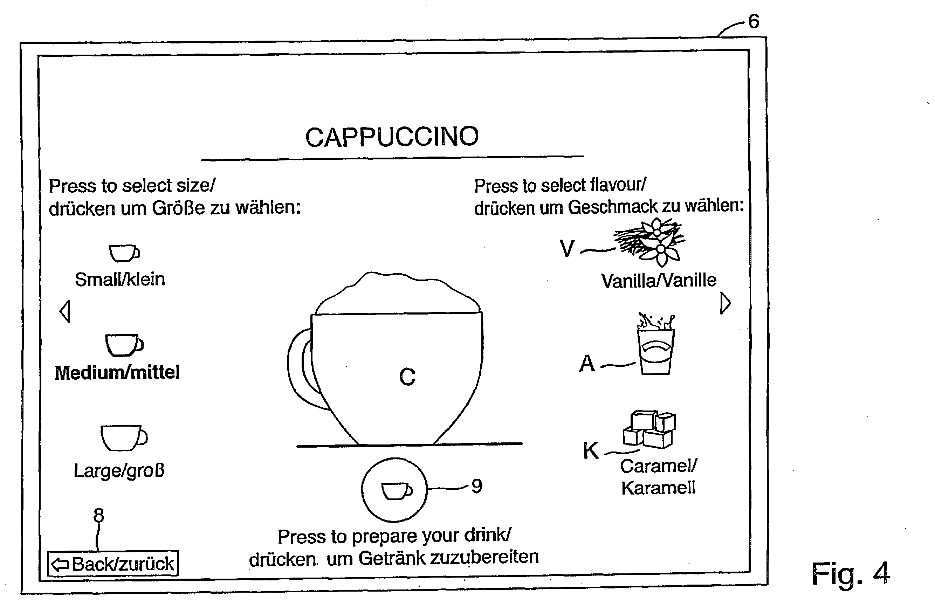

Wird der Benutzer in dem Getränkevariante-Auswahlbereich 5 fündig und wählt eine Getränkevariante an, so gelangt er zu einem Vorschaubereich 6 ("preview drink"/Vorschau Getränk). In diesem Vorschaubereich ist die ausgewählte Getränkevariante grafisch dargestellt. Dies wird nachfolgend anhand von Figur 4 näher erläutert. Zusätzlich kann der Benutzer in dem Vorschaubereich 6 Änderungen vornehmen, beispielsweise die Größe des auszugebenden Getränks wählen. Durch Betätigung eines Startelementes wird der Getränkezubereitungsautomat automatisch derart gesteuert, dass die von dem Benutzer gewählte Getränkevariante zubereitet und ausgegeben wird ("drink preparation", Getränkezubereitung).

Auch in dem Vorschaubereich ist es möglich durch ein entsprechendes Rücksprungelement einen Schritt zurück ("one step back" /ein Schritt zurück) zu dem Getränkeauswahlbereich 5 zu gelangen.

Nach Abschluss der Getränkezubereitung wird wiederum der Themenauswahlbereich 4 dargestellt bzw. nach Ablauf einer vorgegebenen Zeitdauer, in welcher keine Auswahl erfolgte, wird wiederum der Leerlaufmodus 1 angezeigt.

Mit diesem Verfahren wird somit erstmals der Benutzer intuitiv und gleichzeitig inspirierend durch zumindest grafisch unterstützte Menüführung zur Zubereitung einer Getränkevariante aus einer Mehrzahl möglicher Getränkevarianten geführt.

Alternativ kann bei diesem Ausführungsbeispiel eines erfindungsgemäßen Getränkezubereitungsautomaten durch den Betreiber wie zuvor beschrieben der Schnellauswahlmodus 3 vorgegeben werden.

Ist der Schnellauswahlmodus 3 vorgegeben und der Benutzer berührt im Leerlaufmodus 1 den Bildschirm, so wird der Auswahlbereich als Schnellauswahlbereich 7 ("browse complete drink catalogue"/komplette Getränkeauswahl durchsuchen) dargestellt. In diesem Ausführungsbeispiel werden dem Benutzer in dem Schnellauswahlbereich 7 kachelartig eine Vielzahl von Getränkevarianten dargestellt und der Benutzer kann in einfacher weise durch Antippen der gewünschten Kachel die entsprechende Getränkevariante auswählen, worauf analog zur vorhergehenden Beschreibung ein Vorschaubereich 6 angezeigt wird, der dem Benutzer grafisch die ausgewählte Getränkevariante darstellt. In diesem Vorschaubereich kann der Benutzer ebenso weitere Einstellungen, wie beispielsweise die Getränkegröße, vornehmen. Vorzugsweise kann der Benutzer in den Vorschaubereich 6 des Themenauswahlmodus 2 die Größe und weitere Komponenten, wie beispielsweise weitere Geschmackszusätze wählen, hingegen in dem Vorschaubereich 6 des Schnellauswahlmodus 3 lediglich die Größe ändern, da alle Geschmacksstoffe bereits durch die ausgewählte Getränkevariante aus dem Schnellauswahlbereich 7 festgelegt sind.

Auch in den Schnellauswahlmodus 3 kann der Benutzer in dem Vorschaubereich 6 durch eine Rücksprungoption ("one step back"/ein Schritt zurück) zu dem Schnellauswahlbereich 7 zurückkehren, sofern er sich nicht für die angezeigte Getränkevariante entscheiden will.

Ebenso kann der Benutzer durch Betätigen eines Startelementes in dem Vorschaubereich 6 in dem Schnellauswahlmodus 3 die Getränkezubereitung ("drink preparation"/Getränkezubereitung) starten, wie zuvor beschrieben.

Figur 2 zeigt nun ein Ausführungsbeispiel des Themenauswahlbereichs 4, mit mehreren Themenkarten 4a, 4b, 4c. Die Themenkarten stellen jeweils eine Untermenge der insgesamt möglichen Getränkevarianten dar, wobei die Untermenge nach einem bestimmten Thema ausgewählt ist. In diesem Ausführungsbeispiel ist eine Themenkarte 4a Originale ("originals"/ Originale) dargestellt, die an sich bekannte Kaffeevarianten wie Cappuccino C, Latte Macchiato L und Espresso E in entsprechenden Gefäßen und grafischer Darstellung der entsprechenden Komponenten wie Milchschaum bzw. Schichtsysteme aus Milch, Kaffee und Milchschaum darstellt. Themenkarte 4b zeigt beispielhaft ein Thema Geschmackskreationen ("Flavour Creation"/ Geschmackskreationen), in welchen Cappuccino C und Latte Macchiato L zusätzlich mit grafischen Symbolen von Geschmacksstoffen wie beispielsweise Karamellwürfeln K und alkoholischen Zusätzen A dargestellt sind, so dass der Benutzer intuitiv erfasst, dass bei diesem Thema Geschmackszusätze, wie beispielsweise alkoholische Getränke oder Karamell zu finden sind. Themenkarte 4c zeigt beispielhaft ein Thema Sommerkreationen ("Summer Creations"/ Sommerkreationen). Hier sind Latte Macchiato L und L' farblich unterschiedlich dargestellt, um beispielsweise durch rosa Einfärbung die Zugabe vor Erdbeergeschmack, welcher zusätzlich durch eine Erdbeere symbolisch dargestellt ist, zu kennzeichnen oder durch Darstellung von Vanilleblüten V darzustellen, dass bei diesem Thema beispielsweise auch Vanille als Geschmackszusatz ausgewählt werden kann.

Mittels Pfeilbedienelementen P und P' kann der Benutzer intuitiv nach links (P) oder nach rechts (P') zu weiteren Themenkarten in an sich bekannter Weise blättern.

Ebenso ist es in diesem Ausführungsbeispiel möglich, in einem Modusauswahlbereich Ma benutzerseitig zwischen dem Themenauswahlmodus 2 ("Inspire me"/Inspirier mich) und dem Schnellauswahlmodus 3 ("Quick Select"/ schnelle Auswahl) zu wechseln. Der Benutzer kann somit, beispielsweise bei Kenntnis dieses Auswahlverfahrens, zur schnelleren Auswahl in den Schnellauswahlmodus 3 schalten, indem er das entsprechend in Figur 4 mit Bezugszeichen 3 gekennzeichnete Feld auswählt, welches in verkleinerter Form grafisch die Kacheln des Schnellauswahlmodus 3 darstellt.

Ebenso ist durch das in Figur 4 mit Bezugszeichen 2 gekennzeichnete Feld 2 in verkleinerter Form der Themenauswahimodus 3 mit den Themenauswahlkarten verkleinert dargestellt. Auch hier wird der Benutzer somit intuitiv die ihm genehme Bedienung vornehmen, ohne dass es einer weiteren Anleitung bedarf, da die entsprechenden Bedienkomponenten grafisch selbsterklärend dargestellt sind.

Ein entsprechendes Thema wird ausgewählt, indem der Benutzer in an sich bekannter Weise die entsprechende Themenkarte, beispielsweise Themenkarte 4b, antippt.

In Figur 3 ist ein Ausführungsbeispiel eines Getränkevariante-Auswahlbereichs 5 dargestellt, wie bei Figur 1 zu dem Themenauswahlmodus 2 erläutert.

In dem Getränkevariante-Auswahlbereich 5 wird dem Benutzer die dem ausgewählten Thema zugeordnete Untermenge von Getränkevarianten grafisch dargestellt. In Figur 3 dargestellt ist beispielsweise mittig ein Cappuccino C mit Vanilleblüten V, so dass der Benutzer unmittelbar und intuitiv wahrnimmt, dass diese Getränkevariante somit Cappuccino mit Vanillegeschmackzusatz darstellt. Zusätzlich ist die jeweils mittig dargestellte Getränkevariante nochmals im oberen Bereich im Klartext benannt, vorliegend Vanillecappuccino ("Vanilla Cappuccino"/ Vanillecappuccino).

Links ist Kaffee Ka mit einem alkoholischen Zusatz A dargestellt; rechts ist Latte Macchiatto L mit dem Geschmackszusatz Karamell, dargestellt durch Karamellwürfel K gezeigt. Auch kann der Benutzer durch Pfeilasten P und P' zu weiteren Getränkevarianten dieses Themas blättern und durch Antippen des entsprechenden grafischen Symbols die gewünschte Getränkevariante auswählen.

Alternativ ist im unteren Bereich ein Rücksprungelement 8 ("back"/zurück) dargestellt. Wie weiterhin intuitiv einfach erfassbar durch den Pfeil nach links ersichtlich, kann der Benutzer durch Auswahl dieses Rücksprungelementes 8 zu der vorherigen Darstellung zurückkehren, vorliegend somit zu dem in Figur 2 dargestellten Themenauswahlbereich 4.

In Figur 4 ist ein Vorschaubereich 6 dargestellt, wie beispielsweise in Figur 1 zu dem Themenauswahlmodus 2 beschrieben.

In diesem Vorschaubereich 6 ist grafisch die ausgewählte Getränkevariante dargestellt, vorliegend Cappuccino C. Der Benutzer erfasst somit in dem Vorschaubereich 6 unmittelbar die von ihm ausgewählte Getränkevariante und kann gegebenenfalls Fehler korrigieren, indem er ein bereits beschriebenes Rücksprungelement 8 ("back"/zurück) betätigt.

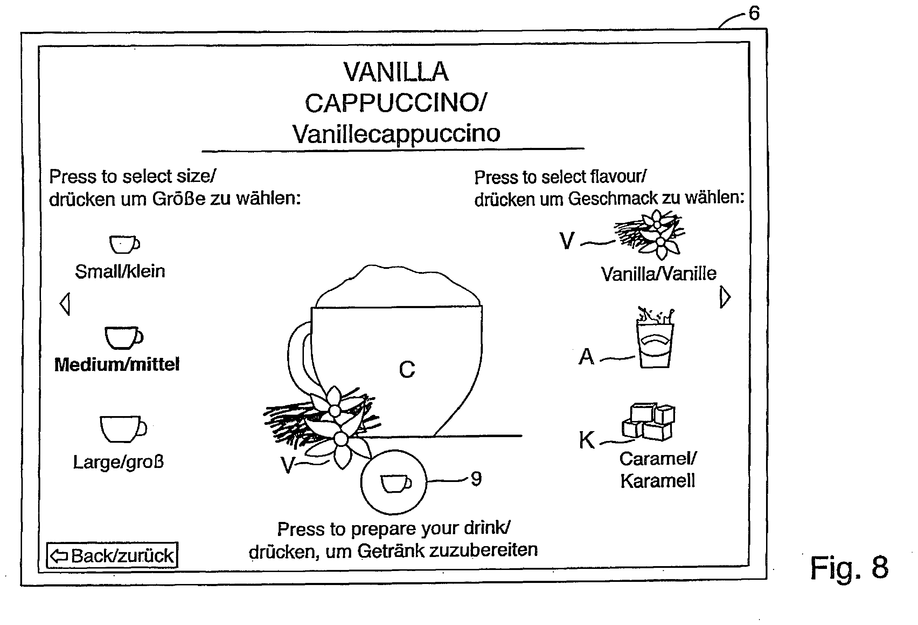

Weiterhin ist im oberen Bereich die gewählte Getränkevariante nochmals im Klartext beschrieben, vorliegend Cappuccino ("Cappuccino"). In diesem Ausführungsbeispiel umfasst der Vorschaubereich zusätzlich einen links dargestellten Optionenbereich, in welchem vorliegend die Größe des auszugebenden Getränks zwischen drei Größen groß ("large"/ groß), mittel ("medium"/ mittel) und klein ("small"/ klein) durch Berühren des entsprechenden Tassensymbols in der gewünschten Größe ausgewählt werden kann. Weiterhin sind rechts Geschmackszusätze dargestellt, die der Benutzer durch Antippen des entsprechenden grafischen Symbols auswählen und somit seinem Getränk zufügen kann (siehe auch Beschreibung zu Figur 8).

Weiterhin ist ein Startelement 9 dargestellt, welches zusätzlich mit einem erklärenden Hinweis "drücken, um Getränk auszugeben" ("press to prepare your drink"/ drücken, um Getränk zuzubereiten) versehen ist.

Der Benutzer kann nun wiederum durch Betätigen des Rücksprungelementes zu der vorherigen Anzeige, vorliegend zu dem Getränkevariante-Auswahlbereich 5 gemäß Figur 3 gelangen oder durch Betätigen des Startelementes 9 die Ausgabe der ausgewählten Getränkevariante starten.

Aufgrund der grafisch unterstützten Benutzerführung wird der Benutzer bei dem erfindungsgemäßen Verfahren somit in intuitiv erfassbarer und unterhaltsamer Weise zur Auswahl einer gewünschten Getränkevariante geleitet, wobei das Risiko der fehlerhaften Auswahl einer nicht gewünschten Getränkevariante erheblich reduziert ist, insbesondere durch die grafische Darstellung in dem Vorschaubereich 6 sowie durch die Möglichkeit, durch Betätigen der entsprechenden Rücksprungelemente 8 eine gegebenenfalls fehlerhafte Auswahl zu korrigieren.

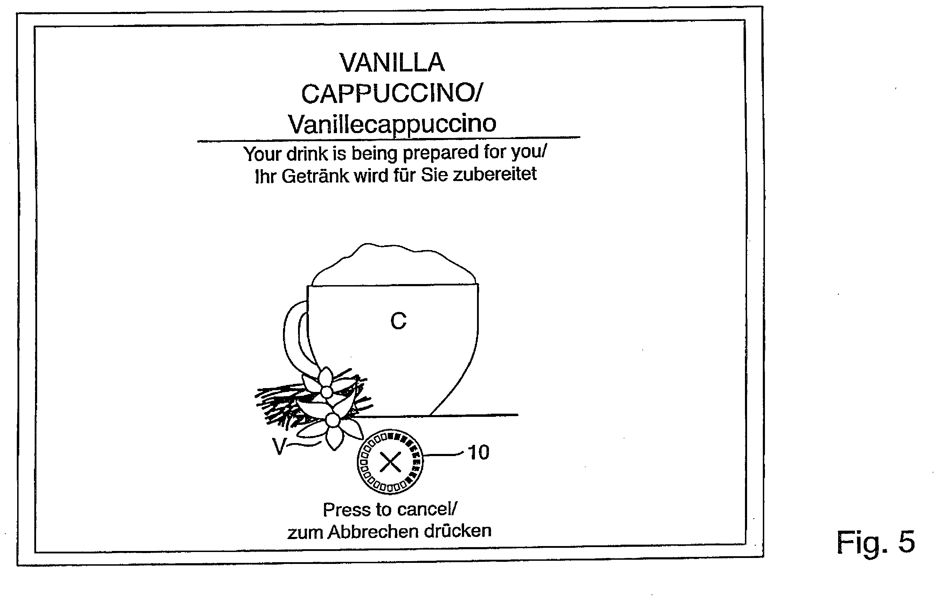

In Figur 5 ist die Bildschirmanzeige während der Getränkezubereitung dargestellt. Hierbei wird nochmals die momentan zubereitete Getränkevariante grafisch und in Klartext dargestellt (vorliegend Cappuccino mit Vanillegeschmack V). Im oberen Bereich wird weiterhin dem Benutzer mitgeteilt, dass das Getränk nun zubereitet und ausgegeben wird ("Your drink is being prepared for you"/Ihr Getränk wird für Sie zubereitet).

In diesem Ausführungsbeispiel ist weiterhin im unteren Bereich ein Abbruchelement 10 dargestellt und mit einem entsprechenden erklärenden Hinweis "zum Abbrechen drücken" ("Press to cancel"/ zum Abbrechen drücken) dargestellt. Sollte wider Erwarten der Benutzer die Getränkezubereitung und/oder Ausgabe abbrechen wollen, so kann er in intuitiv einfacher Weise das an sich verständliche Symbol "X" des Abbruchelements 10 betätigen, worauf die Getränkezubereitung und/oder Ausgabe abgebrochen wird.

Zusätzlich weist das Abbruchelement 10 einen ringförmigen Verlaufsbalken mit mehreren Segmenten auf, so dass der Benutzer in an sich bekannter Weise eines Verlaufbalkens den Fortschritt bei der Getränkezubereitung informiert wird und insbesondere die Zeitdauer bis zum Abschluss der Getränkezubereitung und Ausgabe abschätzen und optisch in einfacher Weise intuitiv erfassen kann.

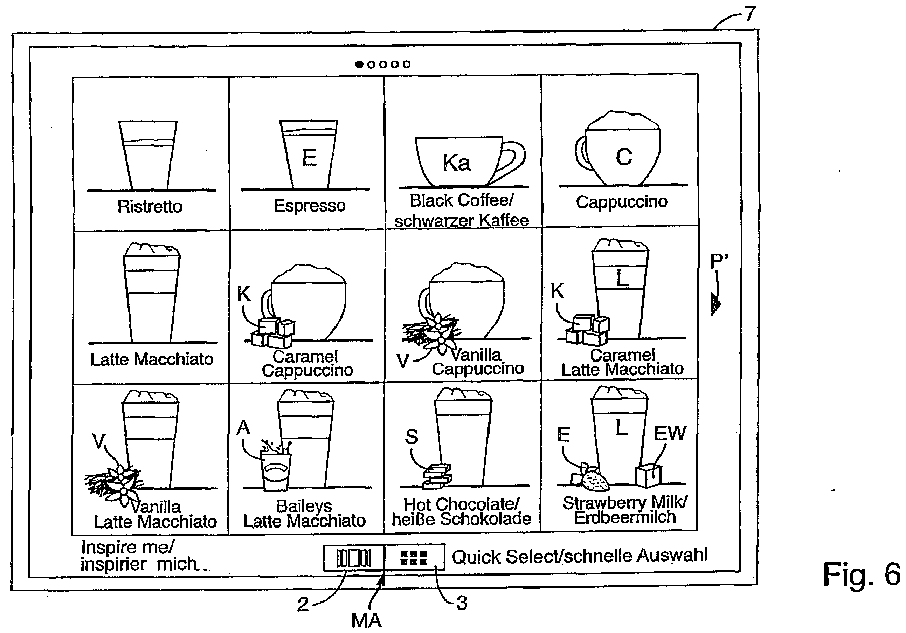

In Figur 6 ist ein Ausführungsbeispiel eines Schnellauswahlbereichs 7 dargestellt wie in Figur 1 zu dem Schnellauswahlmodus 3 beschrieben.

Der Schnellauswahlbereich 7 zeigt kachelartig eine Vielzahl unterschiedlicher Getränkevarianten, die, wie zuvor beschrieben, grafisch bereits die Getränkevariante andeuten, beispielsweise durch Darstellen von Latte Macchiato L, Cappuccino C oder Kaffee Ka oder Espresso E in entsprechenden Gefäßen sowie etwaige Geschmackszusätze durch grafische Symbole wie beispielsweise Karamellwürfel K, Vanilleblüten V, Alkoholzusätze A, Schokoladenzusatz S oder Erdbeergeschmackzusatz durch eine Erdbeere E.

Zusätzlich ist rechts unten bei der Darstellung eines Latte Macchiato L mit Erdbeerzusatz E durch einen Eiswürfel EW intuitiv einfach erfassbar dargestellt, dass es sich bei dieser Getränkevariante um ein Kaltgetränk, vorliegend kalter Latte Macchiato mit Erdbeergeschmackzusatz handelt.

Im unteren Bereich ist wie bereits bei Figur 2 beschrieben ein Auswahlelement MA zum Umschalten zwischen Themenauswahlmodus 2 und Schnellauswahlmodus 3 dargestellt.

Über Pfeiltasten (in Figur 6 dargestellt: Pfeiltaste P') kann zwischen mehreren kachelartigen Darstellungen hin- und her geblättert werden, so dass in dem Schnellauswahlmodus eine Vielzahl von Getränkevarianten dargestellt werden kann.

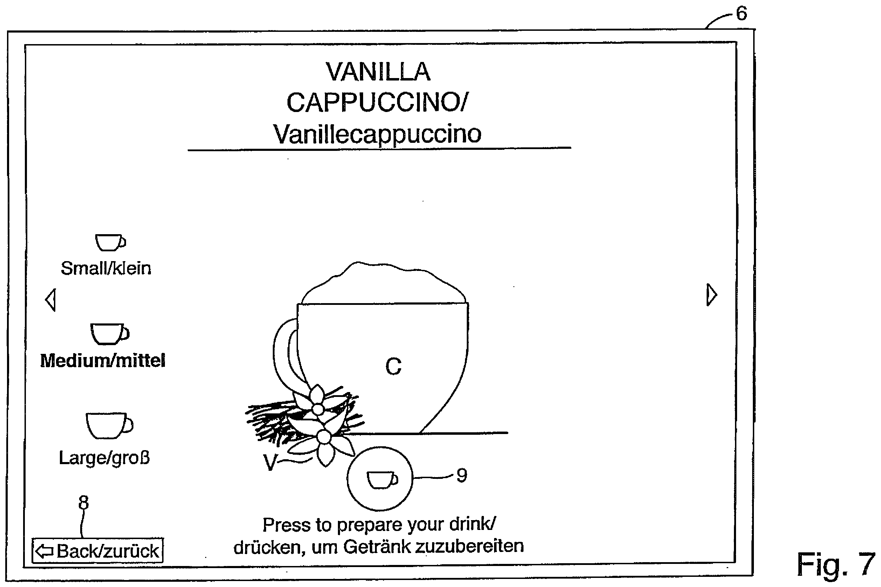

In Figur 7 ist ein weiteres Ausführungsbeispiel eines Vorschaubereichs 6 dargestellt, wie in Figur 1 zu dem Schnellauswahlmodus 3 beschrieben.

Der Vorschaubereich 6 unterscheidet sich von dem in Figur 4 dargestellten Vorschaubereich des Themenauswahlmodus 2 dadurch, dass in dem Vorschaubereich gemäß Figur 7 lediglich die Größe des ausgewählten Getränks verändert werden kann, denn in dem Schnellauswahlmodus ist bereits die Getränkevariante mit allen Komponenten bindend festgelegt und lediglich die Größe kann noch vor der Getränkezubereitung ausgewählt werden.

In dem Vorschaubereich des Themenauswahlmodus 2 gemäß Figur 4 besteht hingegen zusätzlich noch die Wahlmöglichkeit zwischen einem oder mehreren Zusätzen, vorliegend Vanillegeschmack V, alkoholische Getränke A oder Karamellzusatz K.

Figur 8 zeigt einen weiteren grafischen Darstellungszustand des in Figur 4 dargestellten Vorschaubereichs 6: wählt der Benutzer beispielsweise durch Antippen der Vanilleblüte V am rechten Bildschirmrand aus, dass der Zusatz von Vanillegeschmack gewünscht ist, so wird in dem Vorschaubereich 6 bei der Darstellung des Cappuccino C zusätzlich eine Vanilleblüte V angezeigt, so dass der Benutzer intuitiv einfach erfassbar erkennt, dass die ausgewählte Getränkevariante nun Cappuccino C mit Vanillegeschmack V umfasst.

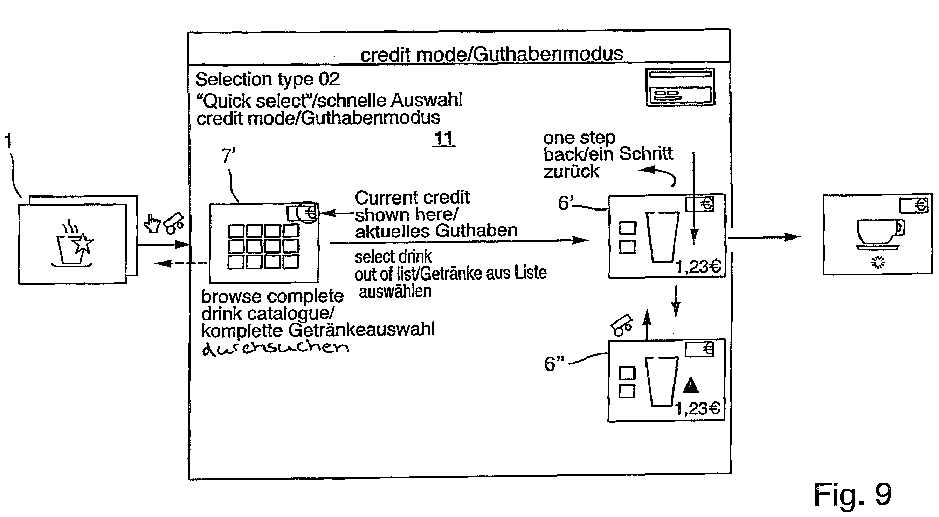

In Figur 9 ist ein Ausführungsbeispiel dargestellt, bei welchem ein Schnellauswahlmodus gemäß des zuvor beschriebenen Schnellauswahlmodus 3 als Guthabenmodus 11 ("Credit Note"/Guthabenmodus) ausgebildet ist.

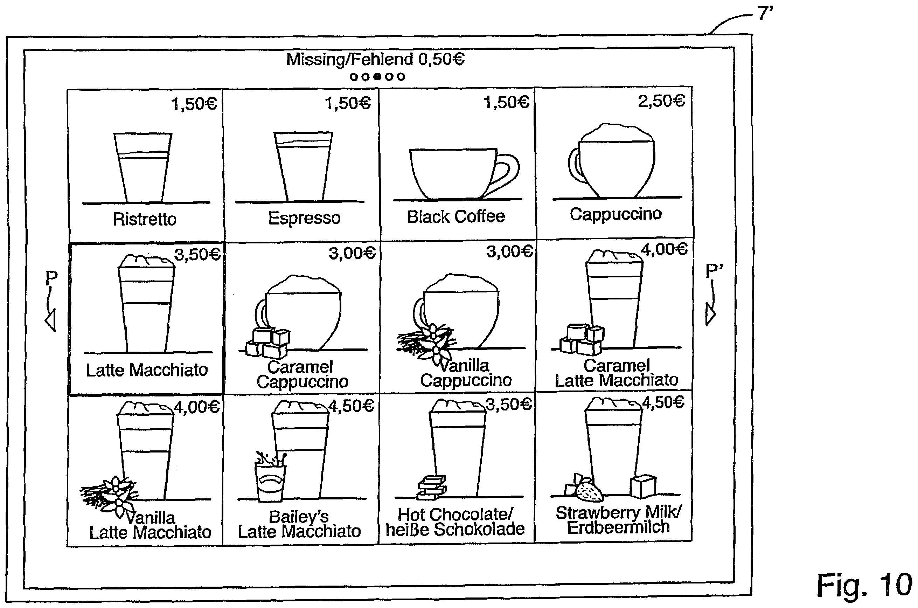

Auch hier wird, wie bei Figur 1 beschrieben, ein Leerlaufmodus 1 dargestellt durch Antippen des Bildschirms oder durch Einwerfen von Geld in den Getränkezubereitungsautomaten wird ein Schnellauswahlbereich 7' im Guthabenmodus dargestellt. Dies wird nachfolgend anhand von Figur 10 näher erläutert.

Nach erfolgter Auswahl einer Getränkevariante in dem Schnellauswahlbereich 7' wird ein Vorschaubereich 6' angezeigt, der analog zu dem zuvor beschriebenen Vorschaubereich 6 gemäß Schnellauswahlmodus 3 in Figur 1 ausgebildet ist. Zusätzlich wird jedoch der Preis der angewählten Getränkevariante angezeigt und es erfolgt eine entsprechende optische Anzeige, sofern der Preis der ausgewählten Getränkevariante den bereits gezahlten Betrag übersteigt, so dass der Benutzer durch ein entsprechendes Rücksprungelement eine andere Wahl treffen kann oder durch Nachwerfen einer entsprechenden Geldsumme einen ausreichenden Getränkebetrag zahlen kann und durch Betätigen eines Startelementes die Getränkezubereitung starten kann. In Figur 10 ist der Schnellauswahlbereich 7' in Ausgestaltung des Guthabenmodus dargestellt. Die Darstellung erfolgt analog zu dem Getränkeauswahlbereich gemäß Figur 6.

Zusätzlich ist jedoch bei jeder Kachel oben rechts der Preis der jeweiligen Getränkevariante angegeben und im oberen Bereich ist der Fehlbetrag ("Missing"/Fehlend) zu einer ausgewählten Getränkevariante bereits angegeben, so dass der Benutzer auch in diesem Stadium bereits den noch fehlenden Geldbetrag nachwerfen kann. Sofern ein ausreichender Geldbetrag bezahlt wurde, gelangt der Benutzer zu dem zuvor beschriebenen Vorschaubereich 6' und kann dort gegebenenfalls noch die Getränkegröße ändern. Sollte sich der Preis durch Auswahl der Getränkegröße erhöhen und der bereits bezahlte Betrag nicht ausreichen, so wird, wie zuvor beschrieben, in einem modifizierten Vorschaubereich 6" durch eine entsprechende Anzeige kenntlich gemacht, dass entweder eine günstigere Getränkevariante, wie beispielsweise eine kleinere Getränkegröße ausgewählt werden muss oder durch entsprechendes Nachzahlen einer ausreichender Geldbetrag eingezahlt werden muss, um eine Getränkezubereitung zu ermöglichen.

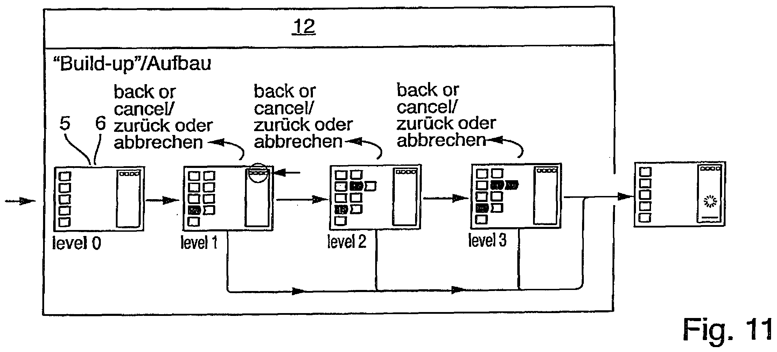

In Figur 11 ist eine schematische Flussdiagrammdarstellung eines Komponenten-Auswahlmodus ("Build-up"/Aufbau) dargestellt.

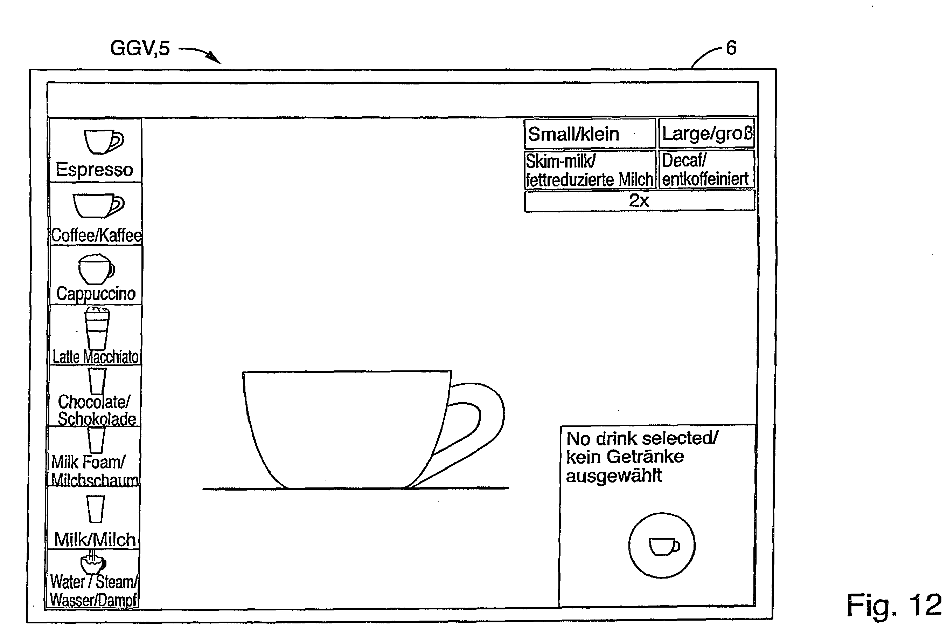

Auch hier gelangt der Benutzer aus einem (nicht dargestellten) Leerlaufmodus in einen Getränkeauswahlbereich 5. Im Unterschied zu den zuvor beschriebenen Themenauswahlmodus 2 und Schnellauswahlmodus 3, bei welchem der Vorschaubereich 6 jeweils nach dem Getränkeauswahlbereich 5 dargestellt wird, ist bei dem in Figur 11 dargestellten Komponenten-Auswahlmodus 12 der Getränkevariante-Auswahlbereich 5 und der Vorschaubereich 6 gleichzeitig dargestellt. Dies wird nachfolgend anhand der Figuren 12 bis 15 näher erläutert.

Durch Auswahl entsprechender Komponenten gelangt der Benutzer zu verschiedenen Auswahlebenen (in Figur 11 exemplarisch dargestellt Ebenen 1 bis 3 ("Level 1", "Level 2", "Level 3")). Auf jeder Ebene kann durch Betätigen eines Startelementes unmittelbar die Getränkezubereitung und Ausgabe gestartet werden oder durch Betätigen eines Rücksprungelementes ("back"/zurück) zu der vorherigen Anzeige zurückgesprungen werden oder durch Betätigen eines Abbruchelementes ("cancel"/abbrechen) zu der Basisebene ("level 0") zurückgesprungen werden.

In Figur 12 ist nun die Basisebene "level 0" des Komponenten-Auswahlmodus 12 dargestellt. Hierbei ist in einer am linken Rand angeordneten Leiste eine Mehrzahl von Getränkegrundvarianten GGV dargestellt, vorliegend Espresso, Kaffee ("Coffee"/ Kaffee), Cappuccino, Latte Macchiato, Schokolade ("Chocolate"/ Schokolade), Milchschaum ("Milk Foam"/ Milchschaum), Milch ("Milk"/ Milch), Wasser/Dampf ("Water/Steam"/ Wasser/Dampf). Im mittleren Bereich befindet sich der Vorschaubereich 6, der vorliegend gemäß Figur 12 eine neutrale Tasse anzeigt, da noch keine Auswahl getroffen wurde. Die dargestellten Getränkegrundvarianten GGV stellen in der Basisebene gemäß Figur 12 somit den Getränkeauswahlbereich 5 dar.

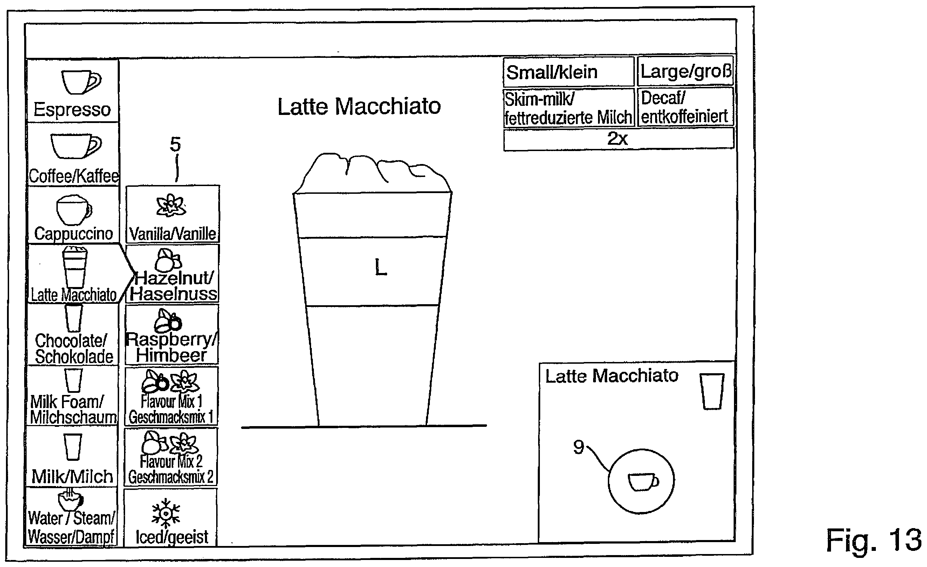

Der Benutzer kann nun durch Antippen einer entsprechenden Kachel einer Getränkegrundvariante, wie beispielsweise der Kachel für Latte Macchiato, diese Getränkegrundvariante auswählen. Durch Auswahl einer Getränkegrundvariante in dem Auswahlbereich 5 gelangt der Benutzer in die Ebene 1, welche in Figur 13 dargestellt ist. In dem Vorschaubereich 6 ist nun die gewählte Grundvariante grafisch dargestellt, vorliegend Latte Macchiato L mit der charakteristischen Schichtstruktur und einem charakteristischem Glas.

Gleichzeitig wird nach Art eines Drop-down-Menüs an der linken Seite die Eingabeleiste erweitert, in dem die ausgewählte Grundvariante, vorliegend die Kachel für Latte Macchiato, grafisch hervorgehoben wird, vorliegend durch Pfeildarstellung und die für diese Getränkegrundvariante vorgesehene Untermenge von Zusatzvarianten in einer zweiten Auswahlspalte, welche nun den Getränkevariante-Auswahlbereich 5 darstellt, angezeigt wird. Vorliegend kann somit für Latte Macchiato ein Vanillegeschmackszusatz ("Vanilla"/ Vanille), dargestellt durch eine Vanilleblüte, ein Haselnussgeschmackszusatz ("Hazelnut"/ Haselnuss), dargestellt durch Haselnüsse und in analoger Weise ein Himbeerzusatz ("Raspberry"/ Himbeer) sowie eine Kombination von Himbeere und Vanille ("Flavour Mix 1", Geschmacksmischung 1) oder von Haselnuss und Vanille ("Flavour Mix 2", Geschmacksmischung 2) sowie eine durch eine Schneeflocke dargestellte gekühlte Variante ("Iced", geeist) ausgewählt werden.

Bel diesem Getränkevariante-Auswahlbereich 5 gemäß Figur 13 ist bereits ersichtlich, dass dem Benutzer nur eine eingeschränkte Auswahl dargestellt wird. Beispielsweise kann vorliegend kein Erdbeergeschmackszusatz ausgewählt werden oder die Kombination von Haselnuss und Himbeere ist nicht möglich. Hierdurch können durch den Betreiber ungünstige Geschmackskombinationen unterbunden werden.

Der Benutzer kann nun in der Darstellung gemäß Figur 13 in dem Getränkeauswahlbereich 5 durch Antippen der entsprechenden Kachel, beispielsweise Haselnuss ("Hazelnut"/Haselnuss) einen gewünschten Geschmackszusatz auswählen oder alternativ durch Betätigen des Startelementes 9 ohne Auswahl eines weiteren Geschmackszusatzes auf der Ebene 1 direkt Latte Macchiato ohne Geschmackszusatz zubereiten und ausgeben lassen.

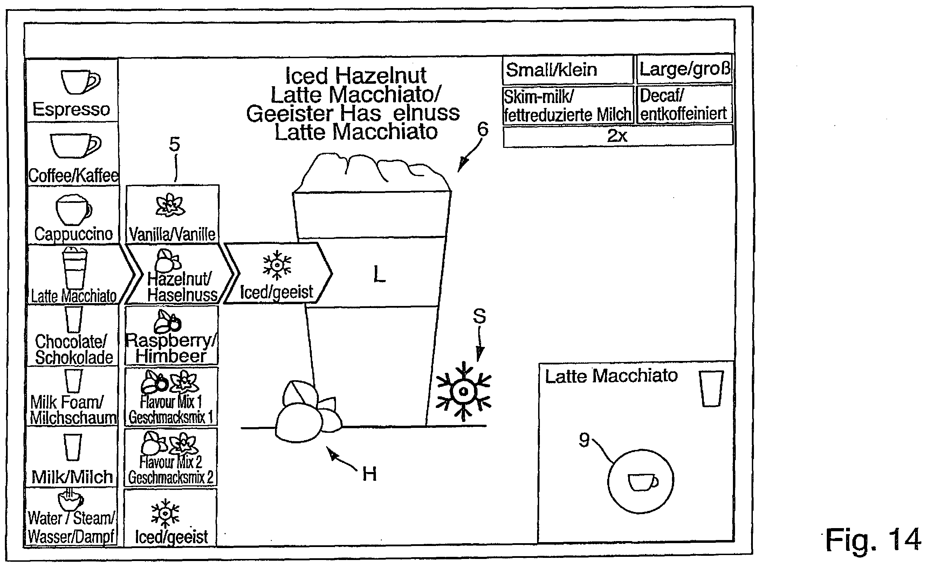

In dem vorliegenden Bedienungsbeispiel wählt der Benutzer die Kachel Haselnuss ("Hazelnut"/Haselnuss) an und gelangt somit in der Darstellung gemäß Figur 14 auf eine Ebene 3 im Komponenten-Auswahlmodus. In dieser Ebene ist in einer dritten Spalte dargestellt, welche weiteren Variationsmöglichkeiten zu der bereits vorgenommenen Auswahl Latte Macchiato und Haselnuss möglich sind. Vorliegend wird in dem Getränkeauswahlbereich 5 gemäß Ebene 3 in der Darstellung nach Figur 14 lediglich geeist ("Iced"/geeist) symbolisiert durch eine Schneeflocke dargestellt. Der Benutzer kann auch auf diese Ebene direkt durch Anwahl des Startelementes 9 die Zubereitung starten, vorliegend somit Latte Macchiato mit Haselnussgeschmack. In dem in Figur 14 dargestellten Bespiel wählte der Benutzer zusätzlich die geeiste Variante. Diese Auswahl wird in dem Vorschaubereich 6 durch die Schneeflocke S grafisch dargestellt, so dass der Benutzer in dem Vorschaubereich 6 nun intuitiv erfasst, dass die aktuelle Auswahl Latte Macchiato L mit Haselnussgeschmack H in geeister Form S gewählt ist.

Wie in den Figuren 12 bis 14 ersichtlich, kann auf jeder Ebene durch Bedienelemente oben rechts eine Modifikation der Größe (klein, "small" oder groß, "large") vorgenommen werden. Ebenso kann fettreduzierte Milch ausgewählt werden ("Skim-milk"/ fettreduzierte Milch) oder eine entkoffeinierte Variante ("Decaf"/entkoffeiniert). Ebenso kann die Ausgabemenge verdoppelt werden ("2x"), beispielsweise wenn in zwei Getränkebehälter gleichzeitig zwei Getränke ausgegeben werden sollen.

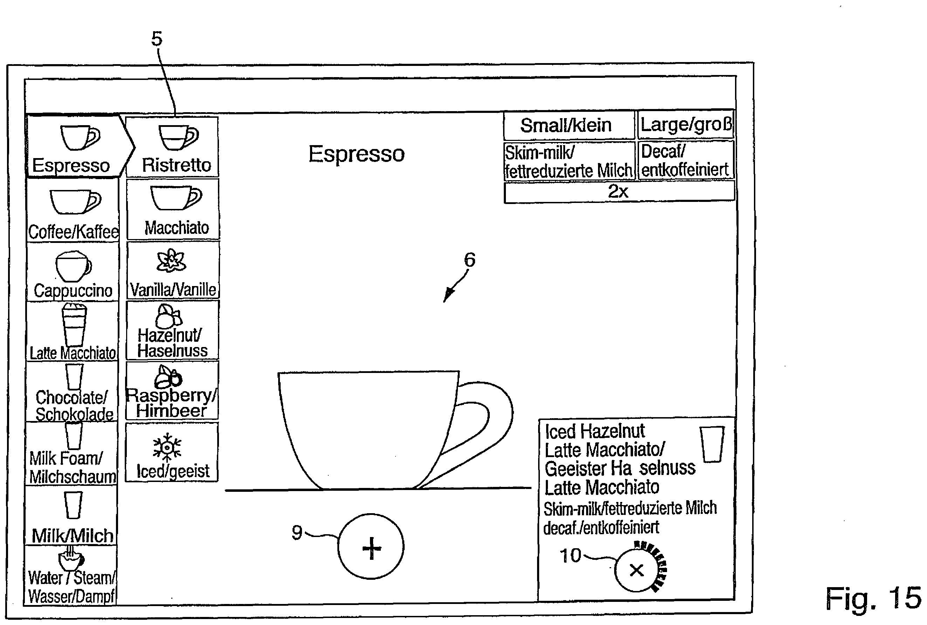

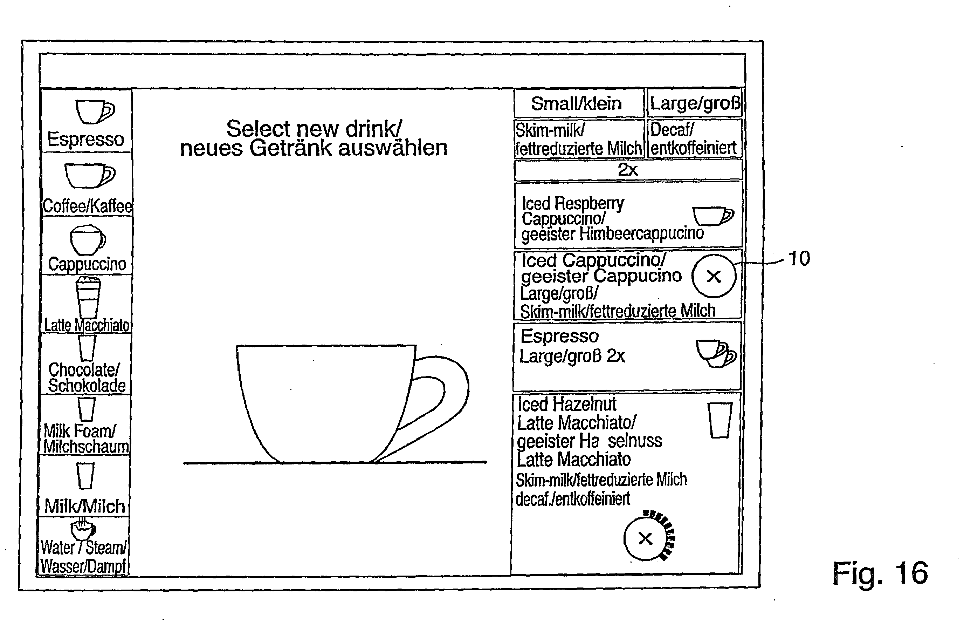

In den Figuren 15 und 16 wird anhand des Komponentenauswahlmodus das Ausführungsbeispiel eines Verfahrens mit Jobliste dargestellt:
In Figur 15 ist ein Komponentenauswahlmodus mit Getränkevariante Auswahlbereich 5 und Vorschaubereich 6 dargestellt, analog zu den Ausführungen gemäß den Figuren 12 bis 14.

Bei dem hier dargestellten Ausführungsbeispiel wählte der Benutzer gemäß Figur 14 das Startelement 9 durch Antippen an, so dass die Zubereitung und Ausgabe der gewählten Getränkevariante Latte Macchiato mit Haselnuss in geeister Form gestartet wird.

In der Ausgestaltung des hier beschriebenen Ausführungsbeispiels des Komponenten-Auswahlmodus mit Jobliste erfolgt anschließend eine Darstellung gemäß Figur 15, in welcher rechts unten das aktuell zubereitete Getränk beschrieben ist und zusätzlich über ein bereits zu Figur 5 beschriebenes Abbruchelement 10 mit ringförmigem, segmentiertem Verlaufspalten eine Abbruchmöglichkeit der Getränkezubereitung und Ausgabe gegeben ist.

Wesentlich ist in der Ausgestaltung mit Jobliste, dass während der Getränkezubereitung und Ausgabe der Benutzer eine Auswahl in dem zuvor beschriebenen Komponenten-Auswahlmodus treffen kann. In der Darstellung gemäß Figur 15 wählte der Benutzer bereits "Espresso". In diesem Ausführungsbeispiel ist im Modus Jobliste das Startelement 9 als "+" dargestellt. Der Benutzer erkennt nach Auswahl der Getränkevariante "Espresso" nun intuitiv, dass er durch Betätigen des Startelements 9 diese weitere Getränkevariante der Jobliste hinzufügen ("addieren") kann.

In Figur 16 ist auf der rechten Seite eine Jobliste dargestellt, bei der gemäß der Darstellung in Figur 15 die erste Getränkevariante Latte Macchiato mit Haselnuss in geeister Form noch zubereitet und ausgegeben wird, der Benutzer anschließend jedoch bereits zwei große Espresso ("Espresso large 2x"/Espresso groß 2x), anschließend einen geeisten Cappuccino mit fettreduzierter Milch in der Variante groß ("Iced Cappuccino large/Skim-milk"/Geeister Cappuccino groß/fettreduzierte Milch) und einen Cappuccino mit Himbeere-Geschmackszusatz in geeister Form ("Iced Raspberry Cappuccino"/Geeister Himbeercappuccino) auswählte.

Diese nacheinander jeweils im Komponenten-Auswahlmodus zusammengestellten und durch Betätigen des Startelementes 9 ausgewählten Getränkevarianten werden in der Jobliste am rechten Rand übereinander dargestellt, so dass der Benutzer in einfacher Weise intuitiv erfasst, in welcher Reihenfolge die einzelnen Getränke zubereitet und ausgegeben werden und insbesondere entsprechende Gefäße unter einen Auslass des Getränkezubereitungsautomaten stellen kann.

Nach Abschluss einer Getränkeausgabe wird die zugehörige unterste Kachel ausgeblendet und die verbleibenden Kacheln der Jobliste nach unten verschoben. In dem in Figur 16 dargestellten Ausführungsbeispiel würde somit nach Abschluss der Ausgabe des Latte Macchiato in geeister Form mit Haselnusszusatz die Kachel für 2x großer Espresso an den rechten unteren Rand verschoben werden und die darüber liegenden Kacheln entsprechend nachgezogen. Die Getränkeausgabe des nächsten Getränks beginnt jedoch erst, wenn der Benutzer die entsprechende Kachel erneut betätigt, so dass dem Benutzer nach Bedarf Zeit bleibt, das entsprechende Behältnis vorzusehen. Ebenso kann der Benutzer durch Antippen einer beliebigen Kachel der Jobliste diese aktivieren, worauf ein Abbruchelement "X" 10 angezeigt wird und der Benutzer somit beliebige Elemente aus der Jobliste durch Betätigen des Abbruchelementes löschen kann.

Ebenso kann der Benutzer in an sich bekannter Weise durch Antippen und Verschieben einer Kachel diese zwischen darüber oder darunter liegende Kacheln schieben, um die Reihenfolge der Ausgabe zu ändern.

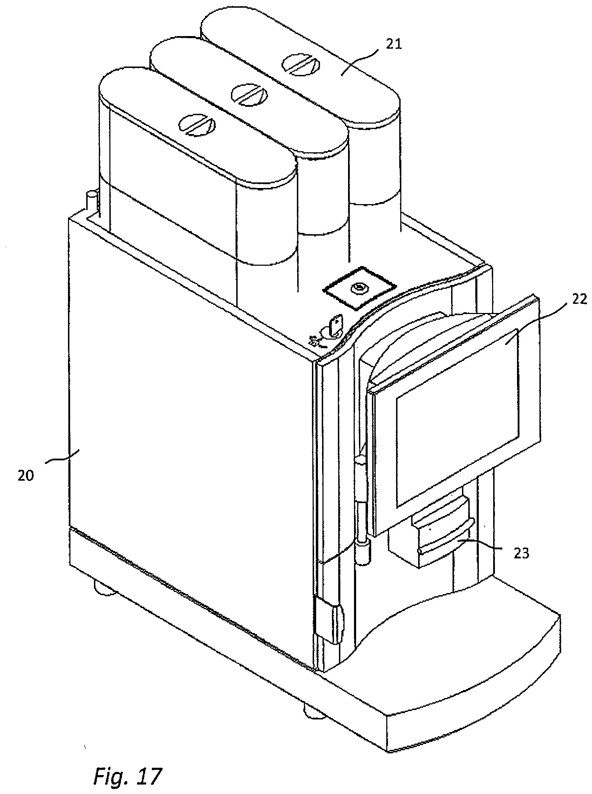

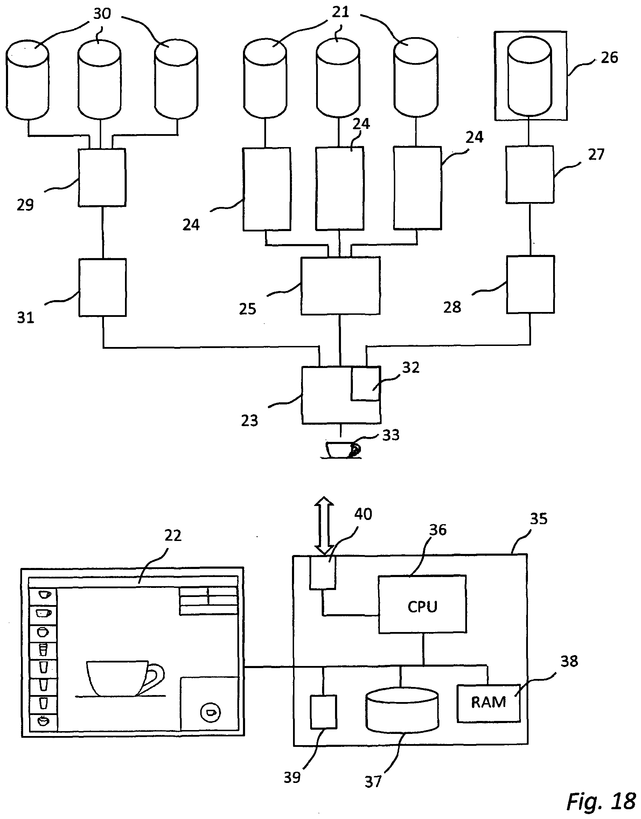

In Figur 17 ist ein erfindungsgemäßer Getränkezubereitungsautomat in Form eines mikroprozessorgesteuerten Kaffeevollautomats 20 gezeigt. Ein zugehöriges, Blockdiagramm, welches schematisches die Funktionseinheiten des Kaffeevollautomats 20 zeigt, ist Figur 18 zu entnehmen.

Der Kaffevollautomat 20 verfügt über drei integrierte Kaffeemühlen 24 für die individuelle Zubereitung von Kaffeespezialitäten wie etwa Ristretto, Espresso, Cafe Creme oder Brühkaffee. Die Kaffeebohnen hierfür stammen aus einem der Bohnenbehälter 21. Ein integriertes Brühsystem 25 mit Metallbrühgruppe und Kolbenheizung ist mit entsprechendem Brüheinsatz zur Zubereitung von klassischem Espresso, Brühkaffee und anderen Kaffeespezialitäten vorgesehen. Die jeweiligen Kaffeebohnen werden nach Erfolgen einer Getränkeauswahl automatisch frisch gemahlen. Auf diese Weise können Kaffeespezialitäten in Einzel- oder Doppeltassen frisch und bedarfsgerecht zubereitet werden. Nach der Brühung wird der trockene Kaffeesatz in der integrierten Satzschublade (nicht gezeigt) gesammelt. Die Satzschublade ist gegen Überfüllung gesichert.

Die Getränkeausgabe erfolgt über einen Kaffeeauslauf 23. Eine automatische Höhenanpassung des Kaffeeauslaufs 23 ermöglicht die Verwendung aller gängigen Tassen 33, Trinkgefäße und Kannen. Optional erkennt ein Tassensensor, ob eine Tasse 33 unter dem Kaffeeauslauf vorhanden ist. Bei fehlender Tasse ist die Produktwahl gesperrt. Bei untergestellter Tasse 33 wird eine Spülfunktion zur Reinigung des Kaffeevollautomats unterdrückt. Zur Befüllung von größeren Kaffeekannen kann optional ein schwenkbarer Kannenauslauf montiert werden.

Durch die Zugabe von Frischmilch über ein integriertes Milchsystem 26, 27, 28 können weitere Produkte wie Milchkaffee, Latte Macchiato, Cappuccino, kalte und warme Milch sowie kalter und warmer Milchschaum zubereitet werden. Ein eingebauter Pulverdosierer 29 bietet die Möglichkeit der Zubereitung von warmen Schoko- oder Mixgetränken. Über einen separaten Auslauf (nicht gezeigt) ist parallel zur Ausgabe von Kaffeegetränken der dosierte oder undosierte Bezug von Heißwasser möglich.

Die Bedienerführung, die Einstellung und Statusfunktionsanzeigen erfolgen auf einem Touchscreen Bildschirm 22, der im Ausführungsbeispiel eine Bildschirmdiagonale von 10,4" aufweist. Für Produktdarstellungen stehen in der Benutzerführung der Gerätesteuerung bis zu sechs individuell definierbare Menükarten zur Verfügung. Zur Bedienung mittels Antippen bzw. Anklopfen stehen auf bis zu fünf Seiten pro Menükarte jeweils 6, 12 oder 20 Produkttasten pro Seite zur Verfügung. Diese können mit vorprogrammierten Bildern belegt und individuell angeordnet werden. Die Menükarten bieten die Möglichkeit, z. B. saisonale Sommer- und Wintergetränke, oder die Unterscheidung nach Rezepturen wie z. B. klassische oder Flavour Getränke sowie Kaltgetränke separat darzustellen. Im optionalen Abrechnungsmodus erfolgt die Produktpreis- und eine gegebenenfalls eine Guthabenanzeige auf dem Touchscreen 22.

Ein integrierter Mediapool bietet die Möglichkeit Bilder und Werbebotschaften per USB-Schnittstelle hochzuladen und in Bedienpausen auf dem Bildschirm 22 einblenden zu lassen. Optional kann in Bedienpausen ein Energiesparmodus für den Bildschirm 22 aktiviert werden.

Die im Kaffeevollautomat 20 eingebauten Kaffeemühlen 24 sind mit Keramikmahlscheiben und transparenten, abnehmbaren Bohnenbehältern 21 ausgestattet. Der Inhalt der Bohnenbehälter 21 wird optisch überwacht. Bei Unterschreitung des minimalen Füllstandes erfolgt die automatische Leermeldung auf dem Touchscreen 22 und der entsprechende Produktbezug wird gesperrt. Daneben ermöglicht der Kaffeevollautomat 20 die Zuführung von gemahlenem Kaffee über einen Handeinfülltrichter (nicht gezeigt).

Der Kaffeevollautomat 20 verfügt weiter über einen einem integrierten Pulverdosierer 29 für Schokopulver oder andere handelsübliche Instantflavours. Der Inhalt der betreffenden Vorratsbehälter 30 wird ebenfalls optisch überwacht. Bei Unterschreitung des minimalen Füllstandes erfolgt die automatische Leermeldung auf dem Touchscreen 22 und der entsprechende Produktbezug wird gesperrt. Ein motorbetriebenes Mixersystem 31 sorgt für eine gleichmäßige Vermischung von Wasser und Schoko- bzw. Instantpulver. Das fertige Getränk wird über den Kaffeeauslauf 23 ausgegeben. Eine Kombination von Schoko- bzw. Instantgetränk und Kaffeeprodukten ist ebenfalls möglich.

Das Milchsystem weist eine Kühleinheit 26 mit integrierter Milchpumpe 27 auf, die für eine optimale Dosierung der Milchmenge sorgt. Die Frischmilch wird in einem Durchlauferhitzer 28 bis max. 80° C erhitzt, über einen im Kaffeeauslauf 23 integrierten Milchschäumer 32 aufgeschäumt und mit dem Kaffeegetränk in einem Arbeitsgang ausgegeben. Der Zeitpunkt der Milchausgabe vor, mit oder nach der Kaffeeausgabe ist individuell programmierbar. Die gewünschte Schaumkonsistenz von grob/flüssig bis fein/steif und die Schaumtemperatur bis max. 65°C ist pro Getränk individuell programmierbar. Auch verschiedene Schaumkonsistenzen innerhalb eines Getränks sind einstellbar. Die Zubereitung von kalter und warmer Milch ist durch die programmierbare Milchtemperatur möglich

Die Steuerung des Getränkezubereitungsautomat 20 erfolgt durch eine prozessorgesteuerte Steuerungseinrichtung 35 an sich bekannten Aufbaus. Diese besitzt eine zentrale Prozessoreinheit (CPU: Central Processing Unit) 36, welche mit einem nichtflüchtigen Speichermedium 37, beispielsweise einem elektronischen Speichermedium bzw. Halbleiterlaufwerk, welches auch als Solid-State-Disk (SSD) bekannt ist, einer Festplatte, einem Festwertspeicher (ROM oder PROM) oder dergleichen, sowie mit einem Arbeitsspeicher (RAM) 38 über ein Bus-System verbunden ist. Ebenfalls über das Bussystem ist die CPU 36 mit dem Touchscreen Display 22 verbunden, welches als Eingabe- und Ausgabemittel dient. Daneben besitzt die Steuerungseinrichtung 35 eine externe Datenschnittstelle, beispielsweise eine USB, LAN oder WLAN Schnittstelle 39, sowie eine interne Schnittstelle 40, über die die Steuerung 35 mit den einzelnen Baugruppen des Getränkezubereitungsautomats 20 verbunden ist, um diese anzusteuern und von diesen Statusinformationen und gegebenenfalls Fehlermeldungen zu erhalten, was in Figur 18 durch einen Doppelpfeil schematisch verdeutlicht werden soll.

Der Aufbau der Steuerungseinrichtung 35 ist in Figur 18 grob vereinfacht dargestellt und kann weitere an sich bekannte und im Rahmen prozessorbetriebener Steuerschaltungen üblicher und in Handel erhältlicher Bauteile umfassen, wie etwa Grafikprozessor, Speicher- und Peripheriecontroller, Bus-Treiber u. ä., die hier der besseren Übersicht halber nicht dargestellt sind.

Wesentlich ist, dass die Steuerungseinrichtung 35 programmtechnisch derart eingerichtet ist, dass sie ein Steuerprogramm ausführt, welches angepasst und geeignet ist, den Getränkezubereitungsautomat 20 zu steuern und dabei eines der zuvor beschriebenen und im Folgenden beanspruchten Verfahren durchzuführen. Insbesondere wird durch die Steuereinrichtung bei Ablauf des entsprechenden Steuerprogramms das Touchscreen Display 22 derart angesteuert, dass in einem Auswahlmodus zumindest ein Auswahlbereich und ein Vorschaubereich auf der grafischen Anzeige zumindest teilweise grafisch dargestellt werden, wobei in dem Auswahlbereich eine Mehrzahl von auswählbaren Getränkevarianten zumindest teilweise grafisch dargestellt werden, und in dem Vorschaubereich eine von dem Benutzer im Auswahlbereich vorgenommene aktuelle Auswahl zumindest teilweise grafisch dargestellt wird.

Bei Betätigung eines Startelementes durch den Benutzer steuert die Steuerungseinrichtung 35 den Getränkezubereitungsautomat 20 derart an, dass die im Auswahlbereich dargestellte Getränkevariante automatisch zubereitet und aus dem Auslass 23 ausgegeben wird.

Die Steuerungsrichtung 35 kann dabei in unterschiedlichen Betriebsmodi betrieben werden. In einem ersten Betriebsmodus, welcher insbesondere für professionelle Verwendung und Bedienung durch Mitarbeiter im Gastronomiebereich geeignet und angepasst ist, werden Auswahlbereich und Vorschaubereich zeitgleich auf der grafischen Anzeige dargestellt. In einem zweiten Betriebsmodus, welcher insbesondere für eine Selbstbedienung des Getränkezubereitungsautomaten 20 durch Endkunden (self-assisted Modus) geeignet ist, wird hingegen nach Vornahme einer Auswahl durch den Benutzer der Auswahlbereich ausgeblendet und anschließend der Vorschaubereich dargestellt. Ein Wechsel zwischen den Betriebsmodi erfolgt durch eine entsprechende, gegebenenfalls passwortgeschützte Einstellung im Steuerprogramm.

## Patentansprüche

1. Verfahren zum Betreiben eines Getränkezubereitungsautomaten, durch welchen Getränkezubereitungsautomat zumindest eine Kaffeeeinheit zum Ausgeben von Kaffee und eine Zusatzstoffeinheit zum Ausgeben eines Getränkezusatzstoffes bereitgestellt wird, wobei in einem Auswahlmodus mittels einer zumindest teilweise grafischen Anzeige eine Mehrzahl von Getränkevarianten angezeigt werden und mittels Anwahl einer Getränkevariante durch einen Benutzer der Getränkezubereitungsautomat derart gesteuert wird, dass die gewählte Getränkevariante automatisch zubereitet und aus einem Auslass ausgegeben wird,
wobei in dem Auswahlmodus zumindest ein Auswahlbereich und ein Vorschaubereich zumindest teilweise grafisch dargestellt werden, wobei in dem Auswahlbereich eine Mehrzahl von auswählbaren Getränkevarianten zumindest teilweise grafisch dargestellt werden, und in dem Vorschaubereich eine von dem Benutzer im Auswahlbereich vorgenommene aktuelle Auswahl zumindest teilweise grafisch dargestellt wird,
wobei in zumindest einem ersten Betriebsmodus des Getränkezubereitungsautomaten Auswahlbereich und Vorschaubereich zeitgleich dargestellt werden und bei Betätigung eines Startelementes durch den Benutzer der Getränkezubereitungsautomat derart gesteuert wird, dass die im Auswahlbereich dargestellte Getränkevariante automatisch zubereitet und aus dem Auslass ausgegeben wird,
**dadurch gekennzeichnet,**
**dass** in zumindest einem zweiten Betriebsmodus des Getränkezubereitungsautomaten nach Vornahme einer Auswahl durch den Benutzer der Auswahlbereich ausgeblendet und anschließend der Vorschaubereich dargestellt wird.

2. Verfahren nach Anspruch 1,
**dadurch gekennzeichnet,**
**dass** zumindest in dem ersten Betriebsmodus mittels des Auswahlmodus eine Mehrzahl von Getränkevarianten durch den Benutzer auswählbar sind und die ausgewählten Getränkevarianten als eine Jobliste in einem Joblistebereich dargestellt werden, vorzugsweise in der Reihenfolge der Auswahl dargestellt werden,
insbesondere, dass nach Auswahl des Startelementes der Getränkezubereitungsautomat derart gesteuert wird, dass die zuerst dargestellte Getränkevariante zubereitet wird.

3. Verfahren nach Anspruch 2,
**dadurch gekennzeichnet,**
**dass** nach Abschluss der Zubereitung der zuerst dargestellten Getränkevariante die zugehörige Darstellung ausgeblendet wird und die nachfolgend ausgewählten Getränkevarianten der Jobliste jeweils einen Platz in der Liste nach vorne rücken, weiter bevorzugt, dass zu mindestens einem Element der Jobliste, vorzugsweise zu allen Elementen der Jobliste ein Löschelement dargestellt wird, und bei Betätigen eines Löschelementes durch den Benutzer das das zugeordnete Element der Jobliste aus der Jobliste gelöscht wird.

4. Verfahren nach Anspruch 2 oder 3,
**dadurch gekennzeichnet,**
**dass** die Reihenfolge der Getränkevarianten der Jobliste durch den Benutzer änderbar ist, insbesondere mittels grafischem Verschieben.

5. Verfahren nach Anspruch 1,
**dadurch gekennzeichnet,**
**dass** der Auswahlmodus in dem zweiten Betriebsmodus einen Themenauswahlmodus beinhaltet, indem ein Themenauswahlbereich dargestellt wird, vorzugsweise zumindest teilweise grafische dargestellt wird, wobei in dem Themenauswahlbereich eine Mehrzahl von auswählbaren Getränkethemen dargestellt sind,
insbesondere, dass nach Auswahl eines Getränkethemas durch den Benutzer eine diesem ausgewählten Getränkethema zugeordnete Untermenge von Getränkevarianten in dem Auswahlbereich dargestellt wird.

6. Verfahren nach einem der Ansprüche 1 oder 5,
**dadurch gekennzeichnet,**
**dass** der Auswahlmodus in dem zweiten Betriebsmodus einen Schnellauswahlmodus beinhaltet, indem in dem Auswahlbereich gleichzeitig eine Mehrzahl wahlweise auswählbarer, unterschiedlicher Getränkevarianten zumindest teilweise grafisch dargestellt ist,
insbesondere dass die Getränkevarianten in mehrere Untergruppen aufgeteilt ist, wobei jeweils nur die Getränkevarianten einer Untergruppe dargestellt werden und mittels Betätigen einer Blätterfunktion durch den Benutzer zwischen der Darstellung einer Untergruppen und der Darstellung einer oder mehreren weiteren Untergruppe gewechselt wird.

7. Verfahren nach Anspruch einem der vorangegangenen Ansprüche,
**dadurch gekennzeichnet,**
**dass** der Auswahlmodus in dem ersten Betriebsmodus einen Komponentenauswahlmodus beinhaltet, indem in dem Auswahlbereich eine Mehrzahl von durch den Benutzer auswählbaren Getränkegrundvarianten dargestellt werden und bei Auswahl einer Getränkegrundvariante in einem Unterauswahlbereich eine Mehrzahl von durch den Benutzer auswählbaren Getränkemodifikationen zu dieser ausgewählten Getränkegrundvariante angezeigt werden, insbesondere, dass
die Getränkemodifikationen Geschmackszusätze und/oder Zubereitungstemperaturen zu der Getränkegrundvariante umfassen, vorzugsweise, dass die Getränkegrundvarianten eines oder mehrere Elemente der Gruppe Kaffee schwarz, Espresso, Milchkaffee, Cappucino, Latte Macchiato umfassen.

8. Verfahren nach Anspruch 7,
**dadurch gekennzeichnet,**
**dass** die Getränkeuntervarianten grafisch der Getränkehauptvariante nach Art eines Drop-Down-Menus zugeordnet dargestellt werden.

9. Verfahren nach einem der vorangegangenen Ansprüche,
**dadurch gekennzeichnet,**
**dass** werden in dem Vorschaubereich zusätzlich durch den Benutzer auswählbarer Bedienelemente zum Ändern der Getränkeeigenschaft dargestellt, vorzugsweise zum Ändern der Ausgabemenge und/oder der verwendeten Kaffeeart und/oder der Zubereitungstemperatur eines oder mehrerer Elemente des Getränks und/oder zum Hinzufügen eines weiteren Geschmacksstoffes dargestellt werden, insbesondere bevorzugt, dass die Bedienelemente zum Ändern der Getränkeeigenschaft eines oder mehrere Elemente aus der Gruppe entkoffeiniert, klein, groß, zweifach, fettarme Milch umfasst.

10. Verfahren nach Anspruch 9,
**dadurch gekennzeichnet,**
**dass** abhängig von der in dem Vorschaubereich dargestellten Getränkevariante aus einer Gesamtgruppe von Bedienelementen zum Ändern der Getränkeeigenschaft nur eine Untergruppe von der dargestellten Getränkevariante zugeordneten Bedienelementen zum Ändern der Getränkeeigenschaft dargestellt werden.

11. Verfahren nach einem der vorangegangenen Ansprüche,
**dadurch gekennzeichnet,**
**dass** in dem Vorschaubereich zumindest eine der Eigenschaften aus der Gruppe Ausgabemenge des gewählten Getränks, Zusammensetzung des gewählten Getränks, Geschmackszusatzstoffe des gewählten Getränks zumindest teilweise grafisch dargestellt werden, insbesondere, dass die Ausgabemenge durch die Größendarstellung eines Ausgabebehältnisses, insbesondere einer Tasse, einer Espressotasse oder einem Glas dargestellt wird und/oder dass die Zusammensetzung durch Schichten unterschiedlicher Farbe dargestellt wird und/oder dass ein Geschmackszusatzstoff durch ein diesem Geschmack zugeordnetes Piktogramme dargestellt wird.

12. Verfahren nach einem der vorangegangenen Ansprüche,
**dadurch gekennzeichnet,**
**dass** der Auswahlmodus als Guthabenmodus ausgebildet ist, indem ein Guthaben des Benutzers angezeigt wird, indem jeder Getränkevariante ein Preis zugeordnet ist und nur solche Getränkevarianten auswählbar sind, deren Preis kleiner oder gleich dem Guthaben ist, insbesondere, dass bei versuchter Auswahl einer Getränkevariante mit einem Preis größer des Guthabens eine Fehlermeldung und/oder der Fehlbetrag angezeigt wird.

13. Verfahren nach einem der vorangegangenen Ansprüche,
**dadurch gekennzeichnet,**
**dass** die Bedienung mittels eines Berührungsbildschirms erfolgt, insbesondere, dass mehrere, bevorzugt alle Bedienelemente grafisch auf dem Berührungsbildschirm dargestellt werden.

14. Verfahren nach einem der vorangegangenen Ansprüche,
**dadurch gekennzeichnet,**
**dass** wahlweise durch einen Betreiber ein Modus aus der Gruppe Themenauswahlmodus, Schnellauswahlmodus, bevorzugt aus der Gruppe Themenauswahlmodus, Schnellauswahlmodus, Komponentenauswahlmodus vorgebbar ist, insbesondere mittels einer passwortgeschützten Vorgabe.

15. Verfahren nach einem der vorangegangenen Ansprüche,
**dadurch gekennzeichnet,**
**dass** eine Gesamtmenge von Getränkevarianten vorgegeben ist und aus dieser Gesamtmenge eine Untermenge für den Betrieb auswählbar ist, vorzugsweise mittels einer passwortgeschützten Auswahl.

16. Getränkezubereitungsautomat zur Zubereitung von Kaffeegetränken mit zumindest einer Kaffeeeinheit zum Ausgeben von Kaffee und zumindest einer Zusatzstoffeinheit zum Ausgeben eines Getränkezusatzstoffes, einer zumindest teilweise grafischen Anzeige zur Anzeige einer Mehrzahl von Getränkevarianten, und mit einer programmierbaren Steuerungseinheit, welche ausgebildet ist, den Getränkezubereitungsautomat in Abhängigkeit einer Auswahl durch einen Benutzer derart zu steuern, dass die gewählte Getränkevariante automatisch zubereitet und aus einem Auslass ausgegeben wird, wobei die Steuerungseinheit weiter ausgebildet ist, in einem Auswahlmodus zumindest ein Auswahlbereich und ein Vorschaubereich auf der grafischen Anzeige zumindest teilweise grafisch darzustellen, wobei in dem Auswahlbereich eine Mehrzahl von auswählbaren Getränkevarianten zumindest teilweise grafisch dargestellt werden, und in dem Vorschaubereich eine von dem Benutzer im Auswahlbereich vorgenommene aktuelle Auswahl zumindest teilweise grafisch dargestellt wird,
**dadurch gekennzeichnet,**
**dass** die Steuerungseinheit ferner ausgebildet ist, in zumindest einem ersten Betriebsmodus des Getränkezubereitungsautomaten Auswahlbereich und Vorschaubereich zeitgleich auf der grafischen Anzeige darzustellen und bei Betätigung eines Startelementes durch den Benutzer den Getränkezubereitungsautomat derart zu steuern, dass die im Auswahlbereich dargestellte - Getränkevariante automatisch zubereitet und aus dem Auslass ausgegeben wird,
und in zumindest einem zweiten Betriebsmodus des Getränkezubereitungsautomaten nach Vornahme einer Auswahl durch den Benutzer der Auswahlbereich auszublenden und anschließend den Vorschaubereich darzustellen.

17. Gettänkezubereitungsautomaten nach Anspruch 16, bei dem die Steuerung zur Durchführung eines Verfahren nach einem der Ansprüche 1 bis 15 ausgebildet ist.

18. Getränkezubereitungsautomaten nach Anspruch 16, bei dem der Getränkezubereitungsautomat einen Berührungsbildschirm als Bedienelement umfasst.

## Claims

1. Method of operating an automatic beverage preparation machine, by means of which automatic beverage preparation machine at least a coffee unit for dispensing coffee and an additive unit for dispensing a beverage additive is provided, wherein in a selection mode a plurality of beverage variants are displayed by means of an at least partly graphic display and, by means of the selection of a beverage variant by a user, the automatic beverage preparation machine is controlled in such a way that the chosen beverage variant is automatically prepared and dispensed from an outlet,
wherein in the selection mode at least a selection field and a preview field are displayed at least partly in graphic form, wherein in the selection field a plurality of selectable beverage variants are displayed at least partly in graphic form, and in the preview field a current selection made by the user in the selection field is displayed at least partly in graphic form,
wherein in at least one first operating mode of the automatic beverage preparation machine the selection field and the preview field are displayed simultaneously and, on actuation of a start element by the user, the automatic beverage preparation machine is controlled in such a way that the beverage variant displayed in the selection field is automatically prepared and dispensed from the outlet,
**characterised in that**
in at least one second operating mode of the automatic beverage preparation machine, after a selection has been made by the user the selection field is blanked out and then the preview field is displayed.

2. Method according to claim 1,
**characterised in that**
at least in the first operating mode, a plurality of beverage variants are selectable by the user by means of the selection mode and the selected beverage variants are displayed as a job list in a job list field, preferably in the order of selection;
especially, after selection of the start element, the automatic beverage preparation machine is controlled in such a way that the beverage variant first displayed is prepared.

3. Method according to claim 2,
**characterised in that**
after the preparation of the beverage variant last displayed is complete the associated display is blanked out and the subsequently selected beverage variants of the job list are each advanced by one place in the list; more preferably, a cancel element is displayed for at least one element of the job list, preferably for all elements of the job list, and on actuation of a cancel element by the user the associated element of the job list is deleted from the job list.

4. Method according to claim 2 or 3,
**characterised in that**
the order of the beverage variants in the job list can be altered by the user, especially by movement of graphics.

5. Method according to claim 1,
**characterised in that**
the selection mode in the second operating mode includes a theme selection mode, in which a theme selection field is displayed, preferably at least partly in graphic form, a plurality of selectable beverage themes being displayed in the theme selection field; especially, after selection of a beverage theme by the user, a subset of beverage variants associated with that selected beverage theme is displayed in the selection field.

6. Method according to either one of claims 1 and 5,
**characterised in that**
the selection mode in the second operating mode includes a quick selection mode, in which a plurality of different beverage variants which are selectable as desired are simultaneously displayed at least partly in graphic form in the selection field;
especially, the beverage variants are divided into a plurality of subgroups, wherein in each case only the beverage variants of a subgroup are displayed and, by actuation of a scrolling function by the user, alternation between the display of a subgroup and the display of one or more further subgroups takes place.

7. Method according to any one of the preceding claims,
**characterised in that**
the selection mode in the first operating mode includes a component selection mode, in which a plurality of basic beverage variants selectable by the user are displayed in the selection field and, on selection of a basic beverage variant, a plurality of beverage modifications selectable by the user in relation to that basic beverage variant are displayed in a sub-selection field; especially the beverage modifications comprise flavour additives and/or preparation temperatures relating to the basic beverage variant; preferably, the basic beverage variants comprise one or more elements of the group: black coffee, espresso, white coffee, cappuccino, latte macchiato.

8. Method according to claim 7,
**characterised in that**
the beverage sub-variants are displayed graphically in association with the main beverage variant in the manner of a drop-down menu.

9. Method according to any one of the preceding claims,
**characterised in that**
in the preview field there are additionally displayed operating elements which are selectable by the user for modifying the beverage characteristics, preferably for modifying the output volume and/or the type of coffee used and/or the preparation temperature of one or more elements of the beverage and/or for adding a further flavouring; especially preferably, the operating elements for modifying the beverage characteristics comprise one or more elements from the group: decaffeinated, small, large, double, low-fat milk.

10. Method according to claim 9,
**characterised in that**,
in dependence upon the beverage variant displayed in the preview field, from a total group of operating elements for modifying the beverage characteristics there is displayed only a subgroup of those operating elements for modifying the beverage characteristics which are associated with the beverage variant displayed.

11. Method according to any one of the preceding claims,
**characterised in that**
in the preview field there is displayed, at least partly in graphic form, at least one of the characteristics from the group: output volume of the selected beverage, composition of the selected beverage, flavouring additives of the selected beverage; especially the output volume is displayed by a depiction of the size of an output receptacle, especially a cup, an espresso cup or a glass; and/or the composition is represented by layers of different colour; and/or a flavouring additive is represented by a pictogram associated with that flavouring.

12. Method according to any one of the preceding claims,
**characterised in that**
the selection mode is in the form of a credit mode, in which a user's credit is displayed, with each beverage variant being associated with a price and it being possible to select only those beverage variants the price of which is less than or equal to the credit; especially, if an attempt is made to select a beverage variant having a price greater than the credit, an error message and/or the amount of shortfall is displayed.

13. Method according to any one of the preceding claims,
**characterised in that**
operation is effected by means of a touch screen; especially, a plurality, preferably all, of the operating elements are displayed graphically on the touch screen.

14. Method according to any one of the preceding claims,
**characterised in that**
a mode from the group: theme selection mode, quick selection mode, preferably from the group theme selection mode, quick selection mode, component selection mode, can be specified as desired by an operator, especially by means of a password-protected instruction.

15. Method according to any one of the preceding claims,
**characterised in that**
a total set of beverage variants is specified and a subset of that total set is selectable for operation, preferably by means of a password-protected selection.

16. Automatic beverage preparation machine for preparing coffee beverages, having at least one coffee unit for dispensing coffee and at least one additive unit for dispensing a beverage additive, having an at least partly graphic display for displaying a plurality of beverage variants, and having a programmable control unit which is configured to control the automatic beverage preparation machine in dependence upon a selection by a user in such a way that the selected beverage variant is automatically prepared and dispensed from an outlet, the control unit being further configured, in a selection mode, to display on the graphic display at least a selection field and a preview field, at least partly in graphic form, wherein in the selection field a plurality of selectable beverage variants are displayed at least partly in graphic form, and in the preview field a current selection made by the user in the selection field is displayed at least partly in graphic form,
**characterised in that**
the control unit, in at least one first operating mode of the automatic beverage preparation machine, is further configured to display the selection field and the preview field simultaneously on the graphic display and, on actuation of a start element by the user, to control the automatic beverage preparation machine in such a way that the beverage variant displayed in the selection field is automatically prepared and dispensed from the outlet,
and in at least one second operating mode of the automatic beverage preparation machine, after a selection has been made by the user, to blank out the selection field and then display the preview field.

17. Automatic beverage preparation machine according to claim 16, wherein the controller is configured to carry out a method in accordance with any one of claims 1 to 15.

18. Automatic beverage preparation machine according to claim 16, wherein the automatic beverage preparation machine comprises a touch screen as operating element.

## Revendications

1. Procédé pour faire fonctionner un préparateur automatique de boissons, préparateur automatique de boissons par lequel sont mises à disposition au moins une unité à café, servant à délivrer du café, et une unité à additif servant à délivrer un additif pour boisson, sachant que, dans un mode de sélection, une pluralité de variantes de boissons sont affichées au moyen d'un afficheur au moins partiellement graphique et, au moyen de la sélection d'une variante de boisson par un utilisateur, le préparateur automatique de boissons est commandé de telle sorte que la variante de boisson sélectionnée soit automatiquement préparée et délivrée par une sortie,
sachant que, dans ledit mode de sélection, au moins une zone de sélection et une zone de prévisualisation sont représentées au moins partiellement sous forme graphique, sachant qu'une pluralité de variantes de boissons sélectionnables sont représentées au moins partiellement sous forme graphique dans la zone de sélection, et qu'une sélection instantanée, effectuée par l'utilisateur dans la zone de sélection, est représentée au moins partiellement sous forme graphique dans la zone de prévisualisation,
sachant que, dans au moins un premier mode de fonctionnement du préparateur automatique de boissons, la zone de sélection et la zone de prévisualisation sont représentées simultanément, et que, lors de l'actionnement d'un élément de démarrage par l'utilisateur, ledit préparateur automatique de boissons est commandé de telle sorte que la variante de boisson représentée dans ladite zone de sélection soit automatiquement préparée, et délivrée par la sortie,
**caractérisé par le fait**
**que**, dans au moins un second mode de fonctionnement du préparateur automatique de boissons, une fois que l'utilisateur a effectué une sélection, la zone de sélection est masquée et la zone de prévisualisation est ensuite représentée.

2. Procédé selon la revendication 1,
**caractérisé par le fait**
**que**, au moins dans le premier mode de fonctionnement, l'utilisateur peut sélectionner une pluralité de variantes de boissons, au moyen du mode de sélection, et les variantes de boissons sélectionnées sont représentées sous la forme d'une liste de tâches dans une zone de liste de tâches, de préférence dans l'ordre de succession de la sélection ;
notamment par le fait que, après avoir sélectionné l'élément de démarrage, le préparateur automatique de boissons est commandé de telle sorte que la variante de boisson représentée en premier soit préparée.

3. Procédé selon la revendication 2,
**caractérisé par le fait**
**qu'**une fois achevée la préparation de la variante de boisson représentée en dernier, la représentation associée est masquée et les variantes de boissons, consécutivement sélectionnées de la liste de tâches, avancent respectivement d'une place dans ladite liste ; préférentiellement, en outre, par le fait que, pour au moins un élément de la liste de tâches, de préférence pour tous les éléments de ladite liste de tâches, un élément d'effacement est représenté et, lors de l'actionnement d'un élément d'effacement par l'utilisateur, l'élément associé de la liste de tâches est effacé de ladite liste de tâches.

4. Procédé selon la revendication 2 ou 3,
**caractérisé par le fait**
**que** l'ordre de succession des variantes de boissons de la liste de tâches peut être modifié par l'utilisateur, notamment par déplacement graphique.

5. Procédé selon la revendication 1,
**caractérisé par le fait**
**que**, dans le second mode de fonctionnement, le mode de sélection inclut un mode de sélection de thèmes, une zone de sélection de thèmes étant alors représentée, de préférence représentée au moins partiellement sous forme graphique, sachant qu'une pluralité de thèmes de boissons sélectionnables sont représentés dans ladite zone de sélection de thèmes ;
notamment par le fait que, à la suite de la sélection d'un thème de boisson par l'utilisateur, un sous-ensemble de variantes de boissons, associé à ce thème de boisson sélectionné, est représenté dans la zone de sélection.

6. Procédé selon l'une des revendications 1 ou 5,
**caractérisé par le fait**
**que**, dans le second mode de fonctionnement, le mode de sélection inclut un mode de sélection rapide, une pluralité de variantes de boissons différentes, sélectionnables au choix, étant alors représentées simultanément dans la zone de sélection, au moins en partie sous forme graphique ;
notamment par le fait que lesdites variantes de boissons sont scindées en plusieurs sous-groupes, sachant que seules les variantes de boissons d'un sous-groupe sont chaque fois représentées et que, par actionnement d'une fonction de défilement, l'utilisateur alterne entre la représentation d'un sous-groupe et la représentation d'un ou plusieurs autre(s) sous-groupe(s).

7. Procédé selon l'une des revendications précédentes,
**caractérisé par le fait**
**que**, dans le premier mode de fonctionnement, le mode de sélection inclut un mode de sélection de composants, une pluralité de variantes de base de boissons sélectionnables par l'utilisateur étant alors représentées dans la zone de sélection et, lors de la sélection d'une variante de base de boisson, une pluralité de modifications de boissons sélectionnables par ledit utilisateur étant affichées, pour cette variante de base de boisson, dans une zone de sous-sélection ; notamment par le fait que
les modifications de boissons comprennent des adjuvants aromatiques et/ou des températures de préparation pour la variante de base de boisson ;
de préférence par le fait que les variantes de base de boissons comprennent un ou plusieurs élément(s) du groupe café noir, expresso, café au lait, cappuccino, latte macchiato.

8. Procédé selon la revendication 7,
**caractérisé par le fait**
**que** les sous-variantes de boissons sont représentées en étant associées à la variante principale de boisson, sous forme graphique, à la manière d'un menu déroulant.

9. Procédé selon l'une des revendications précédentes,
**caractérisé par le fait**
**que** des éléments de manœuvre, additionnellement sélectionnables par l'utilisateur, sont représentés dans la zone de prévisualisation en vue de modifier la propriété d'une boisson, de préférence en vue de modifier la quantité délivrée et/ou la variété de café utilisée et/ou la température de préparation d'un ou plusieurs élément(s) de ladite boisson, et/ou en vue d'ajouter une autre substance aromatique ; avec préférence particulière, par le fait que lesdits éléments de manœuvre, destinés à modifier ladite propriété de la boisson, comprennent un ou plusieurs élément(s) du groupe décaféiné, petit, grand, double, lait à faible teneur en matières grasses.

10. Procédé selon la revendication 9,
**caractérisé par le fait**
**qu'**en fonction de la variante de boisson représentée dans la zone de prévisualisation, seul est représenté, au sein d'un groupe total d'éléments de manœuvre destinés à modifier la propriété de ladite boisson, un sous-groupe d'éléments de manœuvre qui sont destinés à modifier ladite propriété de la boisson et sont associés à ladite variante de boisson représentée.

11. Procédé selon l'une des revendications précédentes,
**caractérisé par le fait**
**qu'**au moins l'une des propriétés du groupe englobant la quantité délivrée de la boisson sélectionnée, la composition de ladite boisson sélectionnée et des substances aromatiques additionnelles de ladite boisson sélectionnée, est représentée au moins partiellement sous forme graphique dans la zone de prévisualisation ; notamment
par le fait que ladite quantité délivrée est représentée par visualisation de la taille d'un réceptacle de distribution, en particulier d'une tasse, d'une tasse à expresso ou d'un verre ; et/ou par le fait que ladite composition est représentée par des couches de différentes couleurs ; et/ou par le fait qu'une substance aromatique additionnelle est représentée par un pictogramme associé à cet arôme.

12. Procédé selon l'une des revendications précédentes,
**caractérisé par le fait**
**que** le mode de sélection est conçu sous la forme d'un mode sommes créditrices, une somme créditrice de l'utilisateur étant alors affichée, un prix étant assigné à chaque variante de boisson, et seules pouvant être sélectionnées des variantes de boissons dont le prix est inférieur ou égal à ladite somme créditrice ; notamment par le fait qu'un message d'erreur, et/ou la somme manquante, est (sont) affiché(e)(s) lors d'une tentative de sélection d'une variante de boisson dont le prix excède ladite somme créditrice.

13. Procédé selon l'une des revendications précédentes,
**caractérisé par le fait**
**que** la manœuvre s'effectue au moyen d'un écran tactile ; notamment par le fait que plusieurs, de préférence tous les éléments de manœuvre sont représentés graphiquement sur ledit écran tactile.

14. Procédé selon l'une des revendications précédentes,
**caractérisé par le fait**
**qu'**en particulier au moyen d'une prédéfinition protégée par mot de passe, un exploitant peut prédéfinir sélectivement un mode au sein du groupe mode de sélection de thèmes et mode de sélection rapide, de préférence au sein du groupe mode de sélection de thèmes, mode de sélection rapide et mode de sélection de composants.

15. Procédé selon l'une des revendications précédentes,
**caractérisé par le fait**
**qu'**une quantité totale de variantes de boissons est prédéfinie et, sur la base de cette quantité totale, une sous-quantité peut être sélectionnée pour l'exploitation, de préférence au moyen d'une sélection protégée par mot de passe.

16. Préparateur automatique de boissons servant à préparer des boissons à base de café, comprenant au moins une unité à café servant à délivrer du café et au moins une unité à additif servant à délivrer un additif pour boisson, un afficheur au moins partiellement graphique, servant à afficher une pluralité de variantes de boissons, et une unité de commande programmable qui est conçue pour commander ledit préparateur automatique de boissons, en fonction d'une sélection par un utilisateur, de telle sorte que la variante de boisson sélectionnée soit automatiquement préparée et délivrée par une sortie, sachant que ladite unité de commande est également conçue pour représenter au moins partiellement sous forme graphique dans un mode de sélection, sur l'afficheur graphique, au moins une zone de sélection et une zone de prévisualisation, sachant qu'une pluralité de variantes de boissons sélectionnables sont représentées au moins partiellement sous forme graphique dans ladite zone de sélection, et qu'une sélection instantanée, effectuée par l'utilisateur dans ladite zone de sélection, est représentée au moins partiellement sous forme graphique dans ladite zone de prévisualisation,
**caractérisé par le fait**
**que** l'unité de commande est par ailleurs réalisée en vue de représenter simultanément la zone de sélection et la zone de prévisualisation, sur l'afficheur graphique, dans au moins un premier mode de fonctionnement du préparateur automatique de boissons et, lors de l'actionnement d'un élément de démarrage par l'utilisateur, en vue de commander ledit préparateur automatique de boissons de telle sorte que la variante de boisson représentée dans la zone de sélection soit automatiquement préparée et délivrée par la sortie et, dans au moins un second mode de fonctionnement dudit préparateur automatique de boissons, en vue de masquer ladite zone de sélection et de représenter ensuite ladite zone de prévisualisation une fois que l'utilisateur a effectué une sélection.

17. Préparateur automatique de boissons selon la revendication 16, dans lequel la commande ciblant la mise en oeuvre d'un procédé est réalisée en conformité avec l'une des revendications 1 à 15.

18. Préparateur automatique de boissons selon la revendication 16, ledit préparateur automatique de boissons comprenant un écran tactile en tant qu'élément de manœuvre.
